# EUROPEAN PATENT SPECIFICATION

(11) **EP 3 311 575 B1**
(45) Date of publication and mention of the grant of the patent: **19.02.2020**
(21) Application number: 16734807.7
(22) Date of filing: 17.06.2016
(51) Int. Cl.: H04N 19/70, H04N 19/30

(54) **DESIGN OF TRACKS AND OPERATION POINT SIGNALING IN LAYERED HEVC FILE FORMAT**
ENTWURF VON SPUREN UND BETRIEBSPUNKTSIGNALISIERUNG IN GESCHICHTETEM HEVC-DATEIFORMAT
CONCEPTION DE PISTES ET SIGNALISATION DE POINT DE FONCTIONNEMENT DANS UN FORMAT DE FICHIER HEVC EN COUCHES

(30) Priority: 18.06.2015 US 201562181196 P; 16.06.2016 US 201615184930
(43) Date of publication of application: 25.04.2018
(73) Proprietor: Qualcomm Incorporated, San Diego, CA 92121-1714 (US)
(72) Inventor: HENDRY, Fnu, San Diego, CA 92121-1714 (US); WANG, Ye-Kui, San Diego, CA 92121-1714 (US)
(74) Representative: Howe, Steven
(86) International application number: PCT/US2016/038236
(87) International publication number: WO 2016/205747

(56) References cited:
- AMON P ET AL: "File format for Scalable Video Coding (SVC)", 21. JVT MEETING; 78. MPEG MEETING; 20-10-2006 - 27-10-2006; HANGZHOU,CN; (JOINT VIDEO TEAM OF ISO/IEC JTC1/SC29/WG11 AND ITU-T SG.16 ), no. JVT-U139, 22 October 2006 (2006-10-22) , XP030006785, ISSN: 0000-0405
- CYRIL CONCOLATO ET AL: "Clarifications on WD3 of Layered HEVC File Format", 109. MPEG MEETING; 7-7-2014 - 11-7-2014; SAPPORO; (MOTION PICTURE EXPERT GROUP OR ISO/IEC JTC1/SC29/WG11), no. m34353, 2 July 2014 (2014-07-02), XP030062726,
- "Draft text of ISO/IEC DIS 14496-15 4th edition", 111. MPEG MEETING;6-2-2015 - 20-2-2015; GENEVA; (MOTION PICTURE EXPERT GROUP OR ISO/IEC JTC1/SC29/WG11), no. N15182, 6 April 2015 (2015-04-06), XP030021908,

## Description

### FIELD

This disclosure is related to the storage of video content in file formats. More specifically, this disclosure relates to the design of tracks and operation point information for storage of a layered high efficiency video coding (L-HEVC) bitstream in one or more files formed according to the ISO base media file format and file formats derived based on the ISO base media file format.

### BACKGROUND

Video coding standards include ITU-T H.261, ISO/IEC MPEG-1 Visual, ITU-T H.262 or ISO/IEC MPEG-2 Visual, ITU-T H.263, ISO/IEC MPEG-4 Visual, ITU-T H.264 or ISO/IEC MPEG-4 AVC, including scalable video coding and multiview video coding extensions, known as SVC and MVC, respectively, and High Efficiency Video Coding (HEVC), also known as ITU-T H.265 and ISO/IEC 23008-2, including scalable coding (scalable high-efficiency video coding, SHVC) and multiview (multiview high efficiency video coding, MV-HEVC) extensions.

Document AMON P ET AL: "File format for Scalable Video Coding (SVC)", 21. JVT MEETING; 78. MPEG MEETING; 20-10-2006 - 27-10-2006, discloses a file format for Scalable Video Coding (SVC) for putting a plurality of tracks into an ISO Base Media File Format. It is disclosed how to use a single layer per track and to contain the enhancement in-line by using extractors to access the base data. It is also disclosed how to use aggregators to build regular structures of NAL units, so that a plurality of NAL units is put into a single logical NAL unit.

Document CYRIL CONCOLATO ET AL: "Clarifications on WD3 of Layered HEVC File Format", 109. MPEG MEETING; 7-7-2014 - 11-7-2014; SAPPORO, discloses a clarification on the use of 'oinf' and 'tcon' boxes in layered HEVC (L-HEVC). It is proposed to have 'oinf and 'tcon' optional, since for case of encoding a base layer and an enhancement layer in separate tracks, tier/profile/level information is included in the track.

Document "Draft text of ISO/IEC DIS 14496-15 4th edition", 111. MPEG MEETING;6-2-2015 - 20-2-2015; GENEVA; (MOTION PICTURE EXPERT GROUP OR ISO/IEC JTC1/SC29/WG11), no. N15182, discloses a draft of the L-HEVC specification, disclosing configurations of one layer per track, and disclosing the use of aggregators, extractors, 'oinf and 'tcon' boxes.

### BRIEF SUMMARY

In various implementations, provided are techniques and systems for generating an output file for multi-layer video data, where the output file is generated according to a file format. Techniques and systems for processing an output file generated according to the file format are also provided. The multi-layer video data may be, for example, video data encoded using a layered high-efficiency video coding (L-HEVC) video encoding algorithm. The file format may be based on the ISO base media file format (ISOBMFF).

A device for encoding video data is provided in accordance with claim 1, a device for decoding is provided in accordance with claim 5, a method for decoding is provided in accordance with claim 9, and a computer-program product tangibly embodied in a non-transitory machine-readable storage medium is provided in accordance with claim 12.

### BRIEF DESCRIPTION OF THE DRAWINGS

Illustrative embodiments are described in detail below with reference to the following drawing figures:
FIG. 1 is a block diagram illustrating an example of a system including an encoding device 104 and a decoding device;
FIG. 2 illustrates an example file structure following the ISO base media file format;
FIG. 3 illustrates and example of a file that includes a video track that includes multiple layers;
FIG. 4 illustrates an example of a file that includes three tracks, each containing at most one layer;
FIG. 5 illustrates another example of a file where each track includes at most one layer;
FIG. 6 illustrates an example of a process for encoding video data;
FIG. 7 illustrates an example of a process for decoding video data;
FIG. 8 is a block diagram illustrating an example encoding device that may implement one or more of the techniques described in this disclosure; and
FIG. 9 is a block diagram illustrating an example decoding device.

### DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the invention. However, it will be apparent that various embodiments may be practiced without these specific details. The figures and description are not intended to be restrictive.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment. The invention is set out in the appended claims.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when operations of the process are completed, but could have additional steps not included in a figure. A process may correspond to a method, a function, a procedure, a subroutine, a subprogram, etc. When a process corresponds to a function, the process's termination can correspond to a return of the function to the calling function or the main function.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

Furthermore, embodiments may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) comprising circuitry (e.g. integrated circuit(s)) may be configured to perform the necessary tasks.

As more devices and systems provide consumers with the ability to consume digital video data, the need for efficient video coding techniques becomes more important. Video coding is needed to reduce storage and transmission requirements necessary to handle the large amounts of data present in digital video data. Various video coding techniques may be used to compress video data into a form that uses a lower bit rate while maintaining high video quality.

Digital video data may be stored and/or transported for various purposes. For example, a streaming media provider may store digital copies of movies on a database server, and transmit the movies over the Internet to viewers. To store and/or transport video data, the video data may be placed in one or more files. Various formats can be used to store video data in files. One such format is the International Standards Organization (ISO) base media file format (ISOBMFF).

A given video, such as a movie, can also be encoded in various different ways, including at different qualities, resolutions, frame rates, and/or depths. The same video may also have different temporal encodings, such as for example 30 frames-per-second (fps) or 60 fps. Layered HEVC (L-HEVC) is one video compression standard that provides for encoding a video in multiple ways, where each encoding (e.g., quality, resolution, frame rate, depth, etc.) may be called a layer. The various layers for a single video can be stored in the same file or group of files. ISOBMFF specifies that video data (and associated audio data) can be stored in a file in tracks (e.g., one or more video tracks, one or more audio tracks, etc.). ISOBMFF further specifies that one or more layers can be stored in one track. Typically, an encoder device may be configured to determine how the layers of a given video are stored into tracks in a file. The file may further include information that allows a decoder device to determine how to unpack the layers from the tracks in the file.

Allowing any number of layers per track may create excessive complexity for decoders. For example, given a video that includes three layers, a file can be created for the video that includes either three tracks with one track per layer, one track containing all the layers, or one track containing one layer and one track containing two layers, among other variations. When the file is also constructed with structures for increased packing efficiency, such as aggregators or extractors, the number of different ways that a single video can be written into a file may increase dramatically. Decoder devices that receive layered video data may need to support all the different file formats that can result when multiple layers are allowed to be stored in one track.

In various implementations, provided are systems and methods for constraining the format of a video file to have at most one layer per track. By constraining the format of the video file suck that each layer of a given video is stored in at most one track, the number of file formats that decoder devices would need to support is greatly reduced. Encoding the video into a file is also greatly simplified.

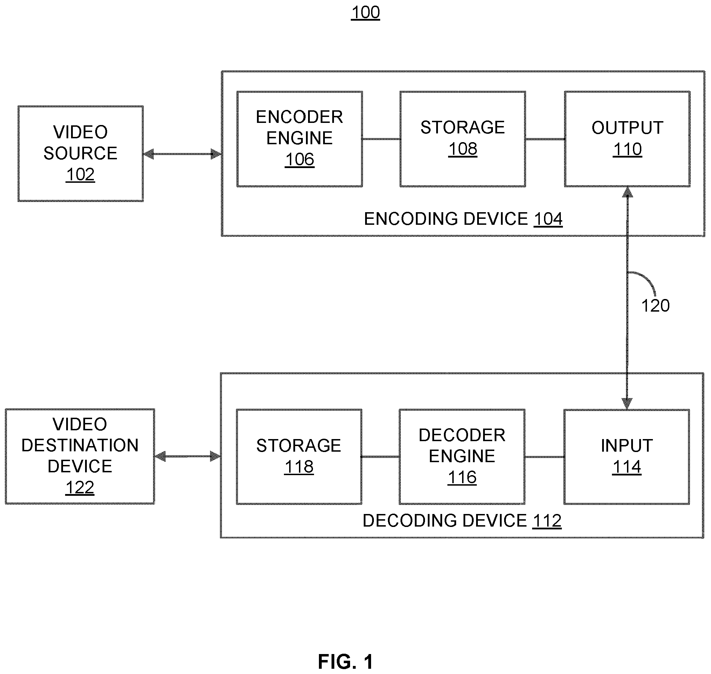

FIG. 1 is a block diagram illustrating an example of a system 100 including an encoding device 104 and a decoding device 112. The encoding device 104 may be part of a source device, and the decoding device 112 may be part of a receiving device. The source device and/or the receiving device may include an electronic device, such as a mobile or stationary telephone handset (e.g., smartphone, cellular telephone, or the like), a desktop computer, a laptop or notebook computer, a tablet computer, a set-top box, a television, a camera, a display device, a digital media player, a video gaming console, a video streaming device, or any other suitable electronic device. In some examples, the source device and the receiving device may include one or more wireless transceivers for wireless communications. The coding techniques described herein are applicable to video coding in various multimedia applications, including streaming video transmissions (e.g., over the Internet), television broadcasts or transmissions, encoding of digital video for storage on a data storage medium, decoding of digital video stored on a data storage medium, or other applications. In some examples, system 100 can support one-way or two-way video transmission to support applications such as video conferencing, video streaming, video playback, video broadcasting, gaming, and/or video telephony.

The encoding device 104 (or encoder) can be used to encode video data using a video coding standard or protocol to generate an encoded video bitstream. Video coding standards include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264 (also known as ISO/IEC MPEG-4 AVC), including its scalable video coding and multiview vide coding extensions, known as SVC and MVC, respectively. A more recent video coding standard, High-Efficiency Video Coding (HEVC), has been finalized by the Joint Collaboration Team on Video Coding (JCT-VC) of ITU-T Video Coding Experts Group (VCEG) and ISO/IEC Moving Picture Experts Group (MPEG). Various extensions to HEVC deal with multi-layer video coding and are also being developed by the JCT-VC, including the multiview extension to HEVC, called MV-HEVC, and the scalable extension to HEVC, called SHVC, or any other suitable coding protocol.

Many embodiments described herein describe examples using the HEVC standard, or extensions thereof. However, the techniques and systems described herein may also be applicable to other coding standards, such as AVC, MPEG, extensions thereof, or other suitable coding standards already available or not yet available or developed. Accordingly, while the techniques and systems described herein may be described with reference to a particular video coding standard, one of ordinary skill in the art will appreciate that the description should not be interpreted to apply only to that particular standard.

A video source 102 may provide the video data to the encoding device 104. The video source 102 may be part of the source device, or may be part of a device other than the source device. The video source 102 may include a video capture device (e.g., a video camera, a camera phone, a video phone, or the like), a video archive containing stored video, a video server or content provider providing video data, a video feed interface receiving video from a video server or content provider, a computer graphics system for generating computer graphics video data, a combination of such sources, or any other suitable video source. One example of a video source 102 can include an Internet protocol camera (IP camera). An IP camera is a type of digital video camera that can be used for surveillance, home security, or other suitable application. Unlike analog closed circuit television (CCTV) cameras, an IP camera can send and receive data via a computer network and the Internet.

The video data from the video source 102 may include one or more input pictures or frames. A picture or frame is a still image that is part of a video. The encoder engine 106 (or encoder) of the encoding device 104 encodes the video data to generate an encoded video bitstream. In some examples, an encoded video bitstream (or "video bitstream" or "bitstream") is a series of one or more coded video sequences. A coded video sequence (CVS) includes a series of access units (AUs) starting with an AU that has a random access point picture in the base layer and with certain properties up to and not including a next AU that has a random access point picture in the base layer and with certain properties. For example, the certain properties of a random access point picture that starts a CVS may include a RASL flag (e.g., NoRaslOutputFlag) equal to 1. Otherwise, a random access point picture (with RASL flag equal to 0) does not start a CVS. An access unit (AU) includes one or more coded pictures and control information corresponding to the coded pictures that share the same output time. Coded slices of pictures are encapsulated in the bitstream level into data units called network abstraction layer (NAL) units. For example, an HEVC video bitstream may include one or more CVSs including NAL units. Two classes of NAL units exist in the HEVC standard, including video coding layer (VCL) NAL units and non-VCL NAL units. A VCL NAL unit includes one slice or slice segment (described below) of coded picture data, and a non-VCL NAL unit includes control information that relates to one or more coded pictures.

NAL units may contain a sequence of bits forming a coded representation of the video data (e.g., an encoded video bitstream, a CVS of a bitstream, or the like), such as coded representations of pictures in a video. The encoder engine 106 generates coded representations of pictures by partitioning each picture into multiple slices. The slices are then partitioned into coding tree blocks (CTBs) of luma samples and chroma samples. A CTB of luma samples and one or more CTBs of chroma samples, along with syntax for the samples, are referred to as a coding tree unit (CTU). A CTU is the basic processing unit for HEVC encoding. A CTU can be split into multiple coding units (CUs) of varying sizes. A CU contains luma and chroma sample arrays that are referred to as coding blocks (CBs).

The luma and chroma CBs can be further split into prediction blocks (PBs). A PB is a block of samples of the luma or a chroma component that uses the same motion parameters for inter-prediction. The luma PB and one or more chroma PBs, together with associated syntax, form a prediction unit (PU). A set of motion parameters is signaled in the bitstream for each PU and is used for inter-prediction of the luma PB and the one or more chroma PBs. A CB can also be partitioned into one or more transform blocks (TBs). A TB represents a square block of samples of a color component on which the same two-dimensional transform is applied for coding a prediction residual signal. A transform unit (TU) represents the TBs of luma and chroma samples, and corresponding syntax elements.

A size of a CU corresponds to a size of the coding node and may be square in shape. For example, a size of a CU may be 8 x 8 samples, 16 x 16 samples, 32 x 32 samples, 64 x 64 samples, or any other appropriate size up to the size of the corresponding CTU. The phrase "N x N" is used herein to refer to pixel dimensions of a video block in terms of vertical and horizontal dimensions (e.g., 8 pixels x 8 pixels). The pixels in a block may be arranged in rows and columns. In some embodiments, blocks may not have the same number of pixels in a horizontal direction as in a vertical direction. Syntax data associated with a CU may describe, for example, partitioning of the CU into one or more PUs. Partitioning modes may differ between whether the CU is intra-prediction mode encoded or inter-prediction mode encoded. PUs may be partitioned to be non-square in shape. Syntax data associated with a CU may also describe, for example, partitioning of the CU into one or more TUs according to a CTU. A TU can be square or non-square in shape.

According to the HEVC standard, transformations may be performed using transform units (TUs). TUs may vary for different CUs. The TUs may be sized based on the size of PUs within a given CU. The TUs may be the same size or smaller than the PUs. In some examples, residual samples corresponding to a CU may be subdivided into smaller units using a quadtree structure known as residual quad tree (RQT). Leaf nodes of the RQT may correspond to TUs. Pixel difference values associated with the TUs may be transformed to produce transform coefficients. The transform coefficients may then be quantized by the encoder engine 106.

Once the pictures of the video data are partitioned into CUs, the encoder engine 106 predicts each PU using a prediction mode. The prediction is then subtracted from the original video data to get residuals (described below). For each CU, a prediction mode may be signaled inside the bitstream using syntax data. A prediction mode may include intra-prediction (or intra-picture prediction) or inter-prediction (or inter-picture prediction). Using intra-prediction, each PU is predicted from neighboring image data in the same picture using, for example, DC prediction to find an average value for the PU, planar prediction to fit a planar surface to the PU, direction prediction to extrapolate from neighboring data, or any other suitable types of prediction. Using inter-prediction, each PU is predicted using motion compensation prediction from image data in one or more reference pictures (before or after the current picture in output order). The decision whether to code a picture area using inter-picture or intra-picture prediction may be made, for example, at the CU level. In some examples, the one or more slices of a picture are assigned a slice type. Slice types include an I slice, a P slice, and a B slice. An I slice (intra-frames, independently decodable) is a slice of a picture that is only coded by Intra prediction, and therefore is independently decodable since the I slice requires only the data within the frame to predict any block of the slice. A P slice (uni-directional predicted frames) is a slice of a picture that may be coded with intra-prediction and uni-directional inter-prediction. Each block within a P slice is either coded with Intra prediction or inter-prediction. When the inter-prediction applies, the block is only predicted by one reference picture, and therefore reference samples are only from one reference region of one frame. A B slice (bi-directional predictive frames) is a slice of a picture that may be coded with intra-prediction and inter-prediction. A block of a B slice may be bi-directional predicted from two reference pictures, where each picture contributes one reference region and sample sets of the two reference regions are weighted (e.g., with equal weights) to produce the prediction signal of the bi-directional predicted block. As explained above, slices of one picture are independently coded. In some cases, a picture can be coded as just one slice.

A PU may include data related to the prediction process. For example, when the PU is encoded using intra-prediction, the PU may include data describing an intra-prediction mode for the PU. As another example, when the PU is encoded using inter-prediction, the PU may include data defining a motion vector for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector.

The encoding device 104 may then perform transformation and quantization. For example, following prediction, the encoder engine 106 may calculate residual values corresponding to the PU. Residual values may comprise pixel difference values. Any residual data that may be remaining after prediction is performed is transformed using a block transform, which may be based on discrete cosine transform, discrete sine transform, an integer transform, a wavelet transform, or other suitable transform function. In some cases, one or more block transforms (e.g., sizes 32 x 32, 16 x 16, 8 x 8, 4 x 4, or the like) may be applied to residual data in each CU. In some embodiments, a TU may be used for the transform and quantization processes implemented by the encoder engine 106. A given CU having one or more PUs may also include one or more TUs. As described in further detail below, the residual values may be transformed into transform coefficients using the block transforms, and then may be quantized and scanned using TUs to produce serialized transform coefficients for entropy coding.

In some embodiments following intra-predictive or inter-predictive coding using PUs of a CU, the encoder engine 106 may calculate residual data for the TUs of the CU. The PUs may comprise pixel data in the spatial domain (or pixel domain). The TUs may comprise coefficients in the transform domain following application of a block transform. As previously noted, the residual data may correspond to pixel difference values between pixels of the unencoded picture and prediction values corresponding to the PUs. Encoder engine 106 may form the TUs including the residual data for the CU, and may then transform the TUs to produce transform coefficients for the CU.

The encoder engine 106 may perform quantization of the transform coefficients. Quantization provides further compression by quantizing the transform coefficients to reduce the amount of data used to represent the coefficients. For example, quantization may reduce the bit depth associated with some or all of the coefficients. In one example, a coefficient with an n-bit value may be rounded down to an m-bit value during quantization, with n being greater than m.

Once quantization is performed, the coded video bitstream includes quantized transform coefficients, prediction information (e.g., prediction modes, motion vectors, or the like), partitioning information, and any other suitable data, such as other syntax data. The different elements of the coded video bitstream may then be entropy encoded by the encoder engine 106. In some examples, the encoder engine 106 may utilize a predefined scan order to scan the quantized transform coefficients to produce a serialized vector that can be entropy encoded. In some examples, encoder engine 106 may perform an adaptive scan. After scanning the quantized transform coefficients to form a vector (e.g., a one-dimensional vector), the encoder engine 106 may entropy encode the vector. For example, the encoder engine 106 may use context adaptive variable length coding, context adaptive binary arithmetic coding, syntax-based context-adaptive binary arithmetic coding, probability interval partitioning entropy coding, or another suitable entropy encoding technique.

The output 110 of the encoding device 104 may send the NAL units making up the encoded video bitstream data over the communications link 120 to the decoding device 112 of the receiving device. The input 114 of the decoding device 112 may receive the NAL units. The communications link 120 may include a channel provided by a wireless network, a wired network, or a combination of a wired and wireless network. A wireless network may include any wireless interface or combination of wireless interfaces and may include any suitable wireless network (e.g., the Internet or other wide area network, a packet-based network, WiFi™, radio frequency (RF), UWB, WiFi-Direct, cellular, Long-Term Evolution (LTE), WiMax™, or the like). A wired network may include any wired interface (e.g., fiber, ethernet, powerline ethernet, ethernet over coaxial cable, digital signal line (DSL), or the like). The wired and/or wireless networks may be implemented using various equipment, such as base stations, routers, access points, bridges, gateways, switches, or the like. The encoded video bitstream data may be modulated according to a communication standard, such as a wireless communication protocol, and transmitted to the receiving device.

In some examples, the encoding device 104 may store encoded video bitstream data in storage 108. The output 110 may retrieve the encoded video bitstream data from the encoder engine 106 or from the storage 108. Storage 108 may include any of a variety of distributed or locally accessed data storage media. For example, the storage 108 may include a hard drive, a storage disc, flash memory, volatile or non-volatile memory, or any other suitable digital storage media for storing encoded video data.

The input 114 of the decoding device 112 receives the encoded video bitstream data and may provide the video bitstream data to the decoder engine 116, or to storage 118 for later use by the decoder engine 116. The decoder engine 116 may decode the encoded video bitstream data by entropy decoding (e.g., using an entropy decoder) and extracting the elements of one or more coded video sequences making up the encoded video data. The decoder engine 116 may then rescale and perform an inverse transform on the encoded video bitstream data. Residual data is then passed to a prediction stage of the decoder engine 116. The decoder engine 116 then predicts a block of pixels (e.g., a PU). In some examples, the prediction is added to the output of the inverse transform (the residual data).

The decoding device 112 may output the decoded video to a video destination device 122, which may include a display or other output device for displaying the decoded video data to a consumer of the content. In some aspects, the video destination device 122 may be part of the receiving device that includes the decoding device 112. In some aspects, the video destination device 122 may be part of a separate device other than the receiving device.

Supplemental Enhancement information (SEI) messages can be included in video bitstreams. For example, SEI messages may be used to carry information (e.g., metadata) that is not essential in order to decode the bitstream by the decoding device 112. This information is useful in improving the display or processing of the decoded output (e.g. such information could be used by decoder-side entities to improve the viewability of the content).

In some embodiments, the video encoding device 104 and/or the video decoding device 112 may be integrated with an audio encoding device and audio decoding device, respectively. The video encoding device 104 and/or the video decoding device 112 may also include other hardware or software that is necessary to implement the coding techniques described above, such as one or more microprocessors, digital signal processors (DSPs), application specific integrated circuits (ASICs), field programmable gate arrays (FPGAs), discrete logic, software, hardware, firmware or any combinations thereof. The video encoding device 104 and the video decoding device 112 may be integrated as part of a combined encoder/decoder (codec) in a respective device.

Extensions to the HEVC standard include the Multiview Video Coding extension, referred to as MV-HEVC, and the Scalable Video Coding extension, referred to as SHVC. The MV-HEVC and SHVC extensions share the concept of layered coding, with different layers being included in the encoded video bitstream. Each layer in a coded video sequence is addressed by a unique layer identifier (ID). A layer ID may be present in a header of a NAL unit to identify a layer with which the NAL unit is associated. In MV-HEVC, different layers can represent different views of the same scene in the video bitstream. In SHVC, different scalable layers are provided that renresent the video bitstream in different spatial resolutions (or picture resolution) or in different reconstruction fidelities. The scalable layers may include a base layer (with layer ID = 0) and one or more enhancement layers (with layer IDs = 1, 2, ... n). The base layer may conform to a profile of the first version of HEVC, and represents the lowest available layer in a bitstream. The enhancement layers have increased spatial resolution, temporal resolution or frame rate, and/or reconstruction fidelity (or quality) as compared to the base layer. The enhancement layers are hierarchically organized and may (or may not) depend on lower layers. In some examples, the different layers may be coded using a single standard codec (e.g., all layers are encoded using HEVC, SHVC, or other coding standard). In some examples, different layers may be coded using a multi-standard codec. For example, a base layer may be coded using AVC, while one or more enhancement layers may be coded using SHVC and/or MV-HEVC extensions to the HEVC standard. In general, a layer includes a set of VCL NAL units and a corresponding set of non-VCL NAL units. The NAL units are assigned a particular layer ID value. Layers can be hierarchical in the sense that a layer may depend on a lower layer.

As previously described, an HEVC bitstream includes a group of NAL units, including VCL NAL units and non-VCL NAL units. Non-VCL NAL units may contain parameter sets with high-level information relating to the encoded video bitstream, in addition to other information. For example, a parameter set may include a video parameter set (VPS), a sequence parameter set (SPS), and a picture parameter set (PPS). Examples of goals of the parameter sets include bit rate efficiency, error resiliency, and providing systems layer interfaces. Each slice references a single active PPS, SPS, and VPS to access information that the decoding device 112 may use for decoding the slice. An identifier (ID) may be coded for each parameter set, including a VPS ID, an SPS ID, and a PPS ID. An SPS includes an SPS ID and a VPS ID. A PPS includes a PPS ID and an SPS ID. Each slice header includes a PPS ID. Using the IDs, active parameter sets can be identified for a given slice.

VCL NAL units include coded picture data forming the coded video bitstream. Various types of VCL NAL units are defined in the HEVC standard, as illustrated in Table A below. In a single-layer bitstream, as defined in the first HEVC standard, VCL NAL units contained in an AU have the same NAL unit type value, with the NAL unit type value defining the type of AU and the type of coded picture within the AU. For example, VCL NAL units of a particular AU may include instantaneous decoding refresh (IDR) NAL units (value 19), making the AU an IDR AU and the coded picture of the AU an IDR picture. The given type of a VCL NAL unit is related to the picture, or portion thereof, contained in the VCL NAL unit (e.g., a slice or slice segment of a picture in a VCL NAL unit). Three classes of pictures are defined in the HEVC standard, including leading pictures, trailing pictures, and intra random access (IRAP) pictures (also referred to as "random access pictures"). In a multi-layer bitstream, VCL NAL units of a picture within an AU have the same NAL unit type value and the same type of coded picture. For example, the picture that contains VCL NAL units of type IDR is said to be an IDR picture in the AU. In another example, when an AU contains a picture that is an IRAP picture at the base layer (the layer ID equal to 0), the AU is an IRAP AU.

File format standards include an ISO base media file format (ISOBMFF, also known as ISO/IEC 14496-12) and other file formats derived from the ISOBMFF, including MPEG-4 file format (also known as ISO/IEC 14496-14), 3GPP file format (also known as 3GPP TS 26.244), and AVC file format (also known as ISO/IEC 14496-15). In general the ISO/IEC 14496-15 specification may buse used as the file format for codecs that tat are based on NAL units (e.g., AVC, SVC, MVC, HEVC, SHVC, and MV-HEVC). The standard for the layered HEVC (L-HEVC) file format is available from the MPEG Committee's website, located at http://phenix.int-every.fr.

The ISOBMFF may be used as the basis for many codec encapsulation formats (e.g., the AVC file format), as well as for many multimedia container formats (e.g., the MPEG-4 file format, the 3GPP file format (3GP), the DVB file format, or other suitable format).

In addition to continuous media (e.g., audio and video), static media (e.g., images) and metadata can be stored in a file conforming to ISOBMFF. Files structured according to the ISOBMFF may be used for many purposes, including local media file playback, progressive downloading of a remote file, as segments for Dynamic Adaptive Streaming over HTTP (DASH), as containers for content to be streamed and packetization instructions for the content, and for recording of received real-time media streams, and/or other uses.

A box is the elementary syntax structure in the ISOBMFF. A box may include a four-character coded box type, the byte count of the box, and the payload. An ISOBMFF file includes a sequence of boxes, and boxes may contain other boxes. For example, a Movie box ("moov") contains the metadata for the continuous media streams present in the file, each one represented in the file as a track. The metadata for a track is enclosed in a Track box ("trak"), while the media content of a track is either enclosed in a Media Data box ("mdat") or directly in a separate file. The media content for tracks includes a sequence of samples, such as audio or video access units.

The ISOBMFF specifies the following types of tracks: a media track, which contains an elementary media stream, a hint track, which either includes media transmission instructions or represents a received packet stream, and a timed metadata track, which comprises time-synchronized metadata.

Although originally designed for storage, the ISOBMFF has proven to be valuable for streaming (e.g., for progressive download or DASH). For streaming purposes, the movie fragments defined in ISOBMFF can be used.

The metadata for each track may include a list of sample description entries, each providing the coding or encapsulation format used in the track and the initialization data needed for processing that format. Each sample is associated with one of the sample description entries of the track.

The ISOBMFF enables specifying sample-specific metadata with various mechanisms. Specific boxes within the Sample Table box ("stbl") have been standardized to respond to common needs. For example, a Sync Sample box ("stss") is used to list the random access samples of the track. The sample grouping mechanism enables mapping of samples according to a four-character grouping type into groups of samples sharing the same property specified as a sample group description entry in the file. Several grouping types have been specified in the ISOBMFF.

The ISOBMFF specification specifies six types of Stream Access Points (SAPs) for use with DASH. The first two SAP types (types 1 and 2) correspond to instantaneous decoding refresh (IDR) pictures in H.264/AVC and HEVC. An IDR picture is an intra-picture (I-picture) that completely refreshes or reinitializes the decoding process at the decoder and starts a new coded video sequence. In some examples, an IDR picture and any picture following the IDR picture in decoding order cannot be dependent on any picture that comes before the IDR picture in decoding order. The third SAP type (type 3) corresponds to open-GOP (Group of Pictures) random access points, such as broken link access (BLA) or clean random access (CRA) pictures in HEVC. A CRA picture is also an I-picture. A CRA picture may not refresh the decoder and may not begin a new coded video sequence (CVS), allowing leading pictures of the CRA picture to depend on pictures that come before the CRA picture in decoding order. Random access may be done at a CRA picture by decoding the CRA picture, leading pictures associated with the CRA picture that are not dependent on any picture coming before the CRA picture in decoding order, and all associated pictures that follow the CRA in both decoding and output order. In some cases, a CRA picture may not have associated leading pictures. In the multi-layer case, an IDR or a CRA picture that belong to a layer with a layer ID greater than zero may be a P-picture or a B-picture, but these pictures can only use inter-layer prediction from other pictures that belong to the same access unit as the IDR or CRA picture, and that have a layer ID less than the layer containing the IDR or CRA picture. The fourth SAP type (type 4) corresponds to gradual decoding refresh (GDR) random access points.

The ISO Base Media File Format is designed to contain timed media information for a presentation in a flexible, extensible format that facilitates interchange, management, editing, and presentation of the media. ISO Base Media File format (ISO/IEC 14496-12:2004) is specified in MPEG-4 Part-12, which defines a general structure for time-based media files. ISOBMFF is used as the basis for other file formats in the family such as the Advanced Video Coding (AVC) file format (ISO/IEC 14496-15) and HEVC file format.

ISO base media file format contains the timing, structure, and media information for timed sequences of media data, such as audio-visual presentations. The file structure is object-oriented. A file can be decomposed into basic objects very simply and the structure of the objects is implied from their type.

Files conforming to the ISO base media file format are formed as a series of objects, called "boxes." In some cases, all data may be contained in boxes and no other data may be placed in the same file, including for example, any initial signature required by the specific file format. The "box" is an object-oriented building block, which may be defined by a unique type identifier and length.

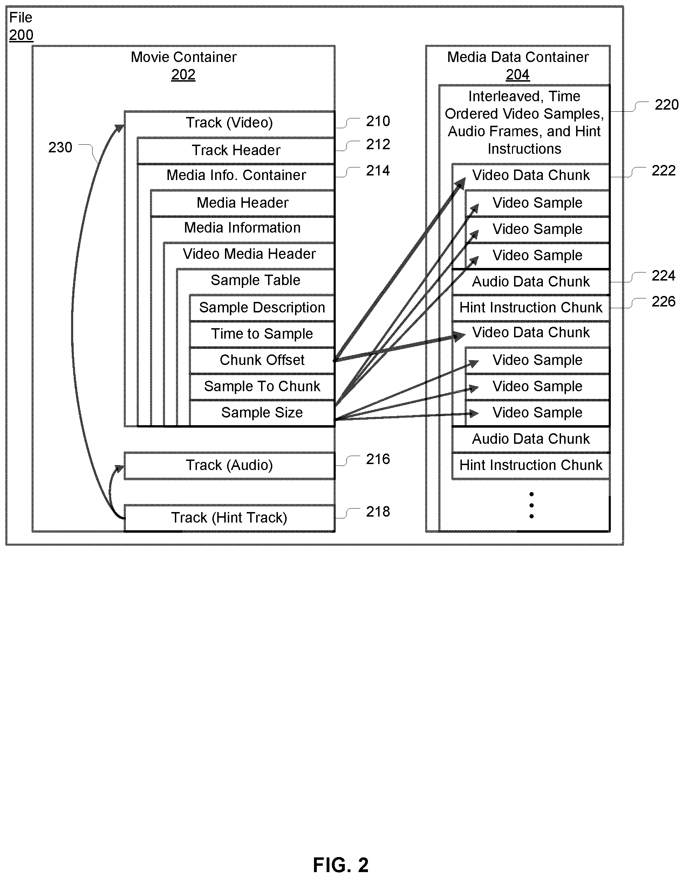

An example file structure following the ISO base media file format is shown in FIG. 2. Typically, but not always, a media presentation is contained in one file 200, wherein the media presentation is self-contained. The movie container 202 (or "movie box") may contain the metadata of the media, such as for example one or more video tracks 210 and audio tracks 216. A video track 216 may contain information about various layers of a video, which may be stored in one or more media information containers 214. For example, a media information container 214 may include a sample table, which provides information about the video samples for the video. In various implementations, the video 222 and audio 224 chunks are contained in the media data container 204. In some implementations, the video 222 and audio 224 chunks can be contained in one or more other files (other than file 200).

In various implementations, a presentation (e.g., a motion sequence) may be contained in several files. All timing and framing (e.g., position and size) information can be in the ISO base media file and the ancillary files may essentially use any format.

The ISO files have a logical structure, a time structure, and a physical structure. The different structures are not required to be coupled. The logical structure of the file is of a movie that in turn contains a set of time-parallel tracks (e.g., track 210). The time structure of the file is that the tracks contain sequences of samples in time, and those sequences are mapped into the timeline of the overall movie by optional edit lists.

The physical structure of the file separates the data needed for logical, time, and structural de-composition, from the media data samples themselves. This structural information is concentrated in a movie box (e.g., movie container 202), possibly extended in time by movie fragment boxes. The movie box documents the logical and timing relationships of the samples, and also contains pointers to where the samples are located. Pointers may point into the same file or another file, which can be referenced by, for example, a Uniform Resource Locator (URL).

Each media stream is contained in a track specialized for that media type. For example, in the example illustrated in FIG. 2, the movie container 202 includes a video track 210 and an audio track 216. The movie container 202 may also include a hint track 218, which may include transmission instructions from the video 210 and/or audio 216 tracks, or may represent other information about other tracks in the movie container 202 or other movie container. Each track may be further parameterized by a sample entry. For example, in the illustrated example, the video track 210 includes a media information container 214, which includes a table of samples. The sample entry contains the 'name' of the exact media type (e.g., the type of the decoder needed to decode the stream) and any parameterization of that decoder needed. The name may take the form of a four-character code (e.g., moov, trak, or other suitable name code). There are defined sample entry formats not only for MPEG-4 media, but also for the media types used by other organizations using this file format family.

The sample entries may further include pointers to video data chunks (e.g., video data chunk 222) in a box 220 in the media data container 204. The box 220 includes interleaved, time ordered video samples (organized into video data chunks, such as video data chunk 222), audio frames (e.g., in audio data chunk 224), and hint instructions (e.g., in hint instruction chunk 226).

Support for metadata can take different forms. In one example, timed metadata may be stored in an appropriate track, synchronized as desired with the media data that the metadata is describing. In a second example, there is general support for non-timed metadata attached to the movie or to an individual track. The structural support is general, and allows, as in the media data, the storage of metadata resources elsewhere in the file or in another file.

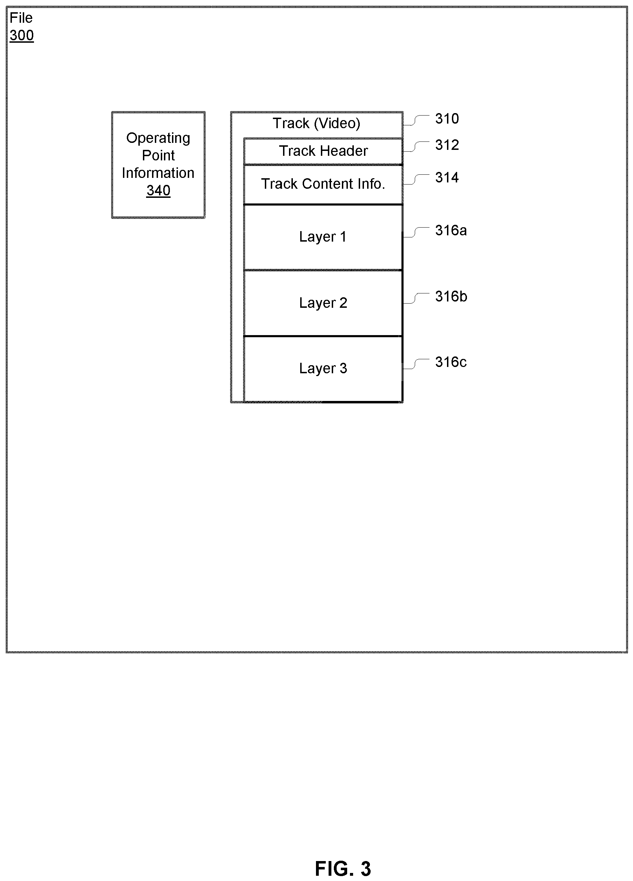

As discussed further below, one track in a video file can contain multiple layers. FIG. 3 illustrates and example of a file 300 that includes a video track 310 with multiple layers 316a-316c, including layer 1 316a, layer 2 316b, and layer 3 316c. The video track 310 may also include a track header 312, which may contain some information about the contents of the video track 310. For example, the track header 312 may include a track content information (also referred to as 'tcon') box. The tcon box may list all of the layers and sub-layers in the video track 310.

The file 300 may also include an operating point information 340 (also referred to as 'oinf') box 340. The oinf box 340 records information about operating points, such as the layers and sub-layers that constitute the operating point, dependencies (if any) between the operating points, the profile, level, and tier parameter of the operating point, and other such operating point relevant information. In some cases, an operating point can also be referred to as an operation point.

The multiple layers 316a-316c may include data for different qualities, resolutions, frame rates, views, depths, or other variations for the video. For example, layer 1 316a may represent the video in 720p resolution, while layer 2 316b may represent the video in 1080p resolution. A layer may also have temporal sub-layers. For example, layer 1 316a may have three temporal sub-layers, with one temporal sub-layer for each of 30 frames-per-second (fps), 50 fps, and 60 fps.

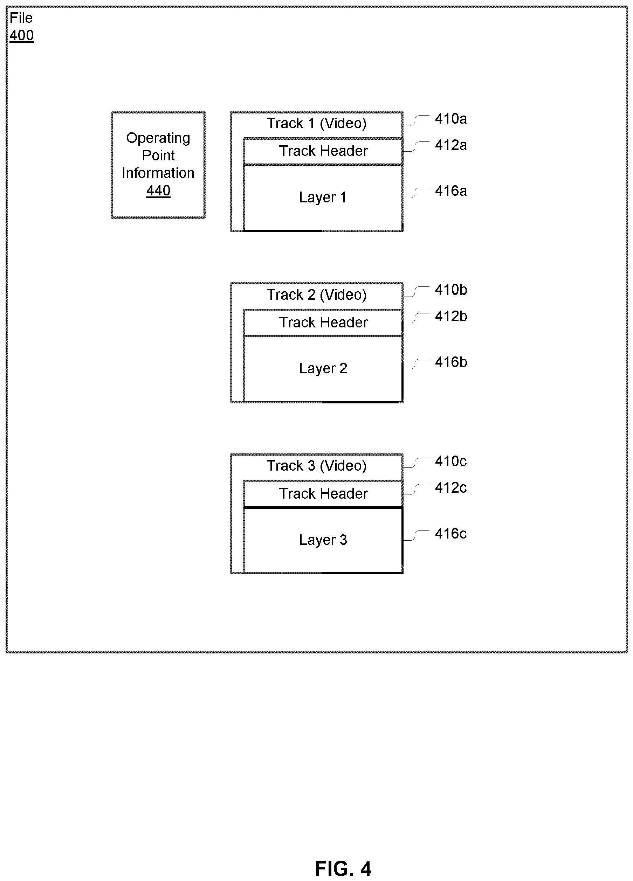

L-HEVC provides that tracks can have more than one layer, as illustrated in FIG. 3. Alternatively or additionally, a track can contain at most one layer. FIG. 4 illustrates an example of a file 400 that includes three tracks 410a-410c, with each track 410a-410c containing one layer (layer 1 416a, layer 2 416b, and layer3 416c). The file 400 may have the same three layers 216a-216c illustrated in FIG. 2, but in FIG. 4, instead of all three layers 416a-416c being contained in one track, each layer 416a-416c is contained in a separate track 410a-410c. Each track 410a-410c may include a track header 412a-412c, which may include some information about the contents of the track. In this example, because each track 210a-210c includes at most one layer each, none of the tracks 210a-210c need a 'tcon' box to describe the contents of the track.

The file 400 shown in FIG. 4 also includes an operating point information ('oinf') box 440. In this example, for each operating point, the oinf box 440 may include a track ID in the list of layers for an operating point.

In various implementations, the examples of FIG. 3 and FIG. 4 could be combined, such that a file includes some tracks that have multiple layers, and some tracks that have at most only one layer.

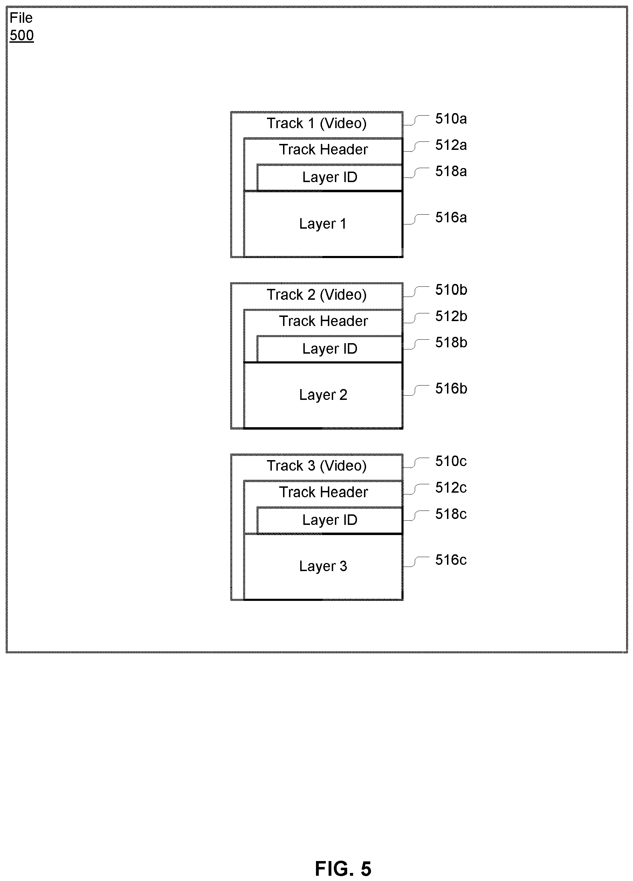

FIG. 5 illustrates another example of a file 500. In the file 500, each track 510a-510c includes one layer 516a-516c. In this example, each track 510a-510c may include a track header 512a-512c, which may include some information about the contents of the track. The file 500 is similar to the file 400 of FIG 4, except that, the track headers 512a-512c of the file 500 in FIG. 5 include a layer ID 518a-518c. The layer ID 518a-518c may identify the respective layer 516a-516c stored in each track 510a-510c. Because the layer IDs 518a-518c provide the identity of the layers 516a-516c contained in each track 510a-510c, in this example an 'oinf' box is not needed.

Existing designs for the L-HEVC file format include a track structure that is complicated, as the existing track structure allows tracks to contain one or more layers of an L-HEVC bitstream, with the use of extractors and aggregators being optionally allowed. As described in the detailed embodiments described below, an aggregator includes a structure to enable efficient scalable grouping of NAL units by changing irregular patterns of NAL units into regular patterns of aggregated data units, and an extractor includes a structure to enable efficient extraction of NAL units from other tracks than the one containing the media data. With such a design, a player is required to handle many different possible variations of track structures and operational modes. Techniques and systems are described in the present disclosure for simplifying track structures and operation modes of players. A summary of the techniques and methods disclosed in this disclosure is given below, with a detailed implementation of some methods provided in later sections. Some of these techniques and methods may be applied independently and some of them may be applied in combination.

In various implementations, techniques and systems for simplifying track structures can include specifying layer information for tracks. For example, a restriction may be provided that requires an encoder to generate an output file with one or more video tracks that each contain at most a single layer or a subset of a single layer. Another restriction can be provided that requires the one or more video tracks not include one or more of an aggregator or an extractor. In some examples, the encoder can assign an identifier to the output file. For example, the identifier can be a sample entry name. The identifier can, for example, indicate, to a decoder, that the output file has at most one layer or a subset of a single layer in each track, and that the output file does not include an aggregator or an extractor. Other examples of sample entry names are provided herein. In implementations where the video tracks in a file are restricted to at most one layer or a subset of one layer, the Track Content Information ('tcon') box may not be needed and can be omitted. In some cases, a file that contains video tracks may include an indicator that indicates that all the data for a particular a layer of an L-HEVC bitstream is carried in one track.

In various implementations, techniques and systems are described for signaling layer identifier (ID) information in the LHEVCDecoderConfigurationRecord variable (described further below) to associate a track with a layer. For example, as illustrated in FIG. 5, each track can include a layer ID that describes the layer contained in the track. The LHEVCDecoderConfigurationRecord variable may be included when a file includes a decoder configuration record. A decoder configuration record may specify decoder configuration information. For example, a decoder configuration record may contain the size of the length field used in each video sample in a file, where the size may to indicate the length of NAL units contained in the sample. The configuration record may also include parameter sets, if any are stored in the sample entry. In some cases, various implementations may add signaling of the track ID in the list of layers of each operation point (described below) in the operating point information (oinf) box. For example, the example file 300 of FIG. 3 includes an oinf box 340, which may provide a list of available operation points in the file 300.

Using the simplification of the track structures, a file parser (e.g., of a media player) may work in a single mode. Without simplifying the track structures, the file parser may otherwise be required to support each of the different operational modes that may be possible with different track structures. For example, a file parser can, first, find the base track (indicated by the 'sbas' track reference) of an L-HEVC bitstream. The parser can then parse the 'oinf box and to obtain information about operation points available in the file. Once the operation point information is obtained, the parser can determine an operation point to use, and, using the operation point information, can determine which tracks carry the layers that are associated with the selected operation point. In some cases, the parser may also use the layer ID in the sample entry description of each "enhancement layer" track (which may be in the base track) to determine which tracks are needed for the selected operation point. The parser can then obtain the tracks and can construct access units based on decoding times. The parser can pass these access units to the video decoder for decoding.

An operation point (or operating point) defines parameters used for working with bitstreams (e.g., for performing sub-bitstream extraction), and includes a list of target layers (a layer set for that operation point) and a target highest temporal layer. Multiple operation points may be applicable to a given bitstream. An operation point may either include all the layers in a layer set or may be a bitstream formed as a subset of the layer set. For example, an operation point of a bitstream may be associated with a set of layer identifiers and a temporal identifier. A layer identifier list may be used to identify the layers to be included in the operation point. The layer identifier list may be included in a parameter set (e.g., a video parameter set (VPS) or other parameter set associated with the bitstream). The layer identifier list may include a list of layer identifier (ID) values (e.g., indicated by a syntax element nuh_layer_id). In some cases, the layer ID values may include non-negative integers, and each layer may be associated with a unique layer ID value so that each layer ID value identifies a particular layer. A highest temporal ID (e.g., identified by a variable TemporalId) may be used to define a temporal subset. In some embodiments, a layer identifier list and a target highest temporal ID may be used as inputs to extract an operation point from a bitstream. For example, when a network abstraction layer (NAL) unit has a layer identifier that is included in a set of layer identifiers associated with an operation point, and the temporal identifier of the NAL unit is less than or equal to the temporal identifier of the operation point, the NAL unit is associated with the operation point. A target output layer is a layer that is to be output, and an output layer set is a layer set that is associated with a set of target output layers. For example, an output layer set is a set of layers including the layers of a specified layer set, where one or more layers in the set of layers are indicated to be output layers. An output operation point corresponds to a particular output layer set. For example, an output operation point may include a bitstream that is created from an input bitstream by operation of a sub-bitstream extraction process with the input bitstream, a target highest temporal identifier (TemporalId), and a target layer identifier list as inputs, and that is associated with a set of output layers.

As an example, a video file may include an operation point that indicates to a player that the video can be played at a 1080p resolution. The video file may thus include a layer set that includes the layer that contains the video encoded at 1080p. The operation point for 1080p may then indicate which tracks in the file contain the layer in this layer set. As another example, the same video file may also include an operation point that specifies 720p resolution at 60fps, or 720p at 30fps. Temporal layers are generally treated as sub-layers, thus the video file may include a layer set that includes the layer for the 720p version of the video, where the layer includes both the 60 fps sub-layer and the 30 fps sub-layer. The file may also include two operations points: first, an operation point that indicates the 720p at 60 fps sub-layer, and second, an operation point that indicates the 720p at 30 fps sub-layer.

As yet another example, a scalable HEVC bitstream may have two layers, one encoded at 720p and another encoded at 1080p. The 1080p bistream may have been encoded by predicting based on the 720p bistream, making the 1080p bistream dependent on the 720op bistream. In this example, each of the 720p bistream and 1080p bistream would be contained in separate tracks. Additionally, while the 1080p operation point would indicate that the track containing the 1080p bitstream is needed, this track would further indicate that the layer is dependent on the 720p layer. A player would thus be instructed to also fetch and decode the track containing the 720p layer.

In various implementations, the 'oinf' box of an L-HEVC file can contain all available operation points for handling the L-HEVC file containing the 'oinf' box. In some implementations, no extractors or aggregators are used in L-HEVC tracks. For example, an L-HEVC track can be required to not use an extractor and/or an aggregator. In some implementations, each operation point described in the 'oinf' box explicitly lists all layers that are included for the operation point. In some implementations, the layer dependency signaling in 'oinf' box may be changed so that, for each layer, the dependency signaling is for describing the list the layers that directly depend on the layer. In some alternative cases, a new type of track reference or a new track reference box may be defined that can be used to indicate the tracks that depend on the track containing the new type of track reference or the new track reference box.

In various implementations, sample entry names for SHVC and MV-HEVC may be differentiated so that it is possible to identify a track scalability type based on the name. In some implementations, operation points available for handling L-HEVC file may be considered as implicit and explicit operation points. Explicit operation points are operation points that are listed in the 'oinf' box. Implicit operation points are operation points that are not listed in 'oinf' box. Each track in which extractors and/or aggregators are present is considered to be associated with an implicit operation point. Sample entry names for tracks when explicit operation points are used are typically different from sample entry names for tracks when implicit operation points are used. based on the name of a track, it may be possible to tell if a track is associated with an implicit operation point or not. In some aspects, division of sample entry names can be as follows: (1) hvc1, hvel, shv1, she1, mhvl, mhe1 are examples of sample entry names used for tracks that are members of explicit operation points; and (2) hvc2, hve2, shv2, she2, mhv2, mhe2 are examples of sample entry names used for tracks that are members of implicit operation points.

In various implementations, a video file may be generated such that implicit and explicit operation points are not used together in one file. For example, all operation points in an L-HEVC file are either implicit operation points or explicit operation points.

In various implementations, for a track with implicit operation points, one or more of the following information may be signaled in the sample entry of the track (i.e., LHEVCDecoderConfigurationRecord): (1) a list of profile, tier and level information for the layers included in the operation points; (2) a flag that indicates whether all layers or only the highest layer of the operation point shall be output; and (3) additional information associated with operation points such as bit rate, frame rate, minimum picture size, maximum picture size, chroma format, bit depth, and so on.

Alternatively, the information listed above can be signaled in a file in another box, such as 'oinf' box.

In various implementations, whether a file includes explicit access unit reconstruction (using extractors) or implicit reconstruction may be specified using a file type, or "brand." The implicit reconstruction brand may indicate that a file has been generated such that each track includes at most one layer. In various implementations, a brand may be specified in a file. For example, the brand may be indicated in a "compatible_brands" field in a box called "FileTypeBox."

In one example, a brand called 'hvce' may be included in a list of brands in the compatible_brands of the FileTypeBox. In this example, each 'hvc2', 'hev2', 'lhv1', and 'lhe1' track may contain (either natively or through extractors) a valid HEVC sub-bitstream, and may contain aggregators. Parsers of the 'hvce' brand may process extractors and aggregators, and are not required to perform implicit reconstruction.

In another example, a brand called 'hvci' may be included in a list of brands in the compatible_brands of the FileTypeBox. In this example, extractors or aggregators would not be present in any 'hvc2', 'hev2', 'lhv1', or 'lhe1' track. Parsers of the 'hvci' brand may perform implicit reconstruction of 'hvc2', 'hev2', 'lhv1', and 'lhe1' tracks and are not required to process extractors and aggregators. In this example, each track of type 'hvc1', 'hev1', 'hvc2', 'hev2', 'lhv1', or 'lhe1' track may contain, at most, one layer.

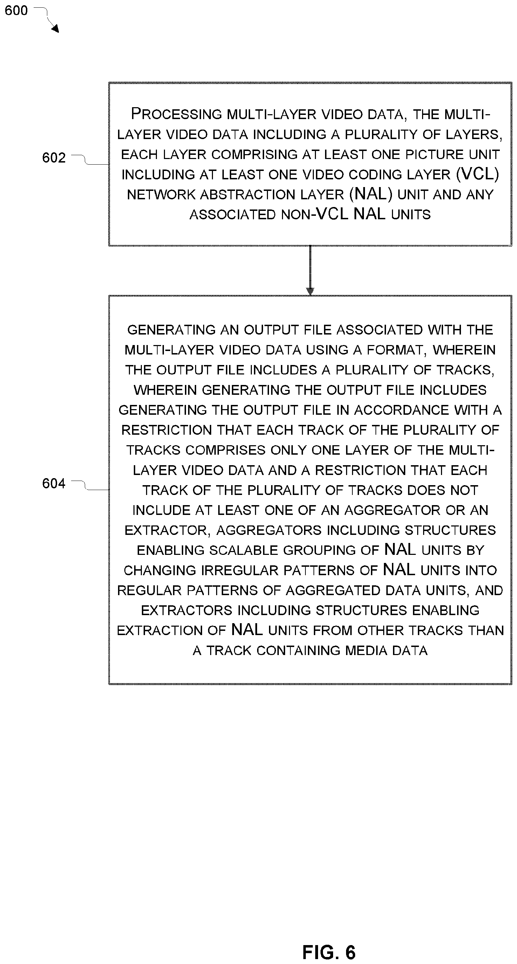

FIG. 6 illustrates an example of a process 600 for encoding video data according to the various implementations described above. In various implementations, the process 600 can be performed by a computing device or apparatus, such as the video encoding device 104 illustrated in FIG. 1. For example, the computing device or apparatus may include an encoder, or a processor, microprocessor, microcomputer, or other component of an encoder that is configured to carry out the steps of process 600 of FIG. 6. In some implementations, the computing device or apparatus may include a camera configured to capture the video data. In some implementations, a camera or other capture device that captures the video data is separate from the computing device, in which case the computing device receives the captured video data. The computing device may further include a network interface configured to communicate the video data. The network interface may be configured to communicate Internet Protocol (IP) based data.

The process 600 is illustrated as a logical flow diagram, the operation of which represent a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, the process 600 may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory.

At step 602, the process 600 may include processing multi-layer video data. The multi-layer video data may include a plurality of layers, each layer comprising at least one picture unit including at least one video coding layer (VCL) network abstraction layer (NAL) unit and any associated non-VCL NAL units. The multi-layer video data may include, for example, a layer that includes the video encoded at a 720p resolution, and a different layer that includes the video encoded at a 1080p resolution. In other examples, the multi-player video data may include layers that include the video encoded at different frame rates, depths, or qualities.

At step 604, the process 600 may generate an output file associated with the multi-layer video data using a format. The output file may include a plurality of tracks. Generating the output file may include generating the output file in accordance with a restriction that each track of the plurality of tracks comprises at most one layer of the multi-layer video data, and a restriction that each track of the plurality of tracks does not include at least one of an aggregator or an extractor. As discussed further below, aggregators include structures enabling scalable grouping of NAL units by changing irregular patterns of NAL units into regular patterns of aggregated data units. As also discussed below, extractors include structures enabling extraction of NAL units from other tracks than a track containing media data.

In some implementations, the process 600 may further include associating a sample entry name with the output file. The sample entry name may indicate that each track in the output file includes at most one layer. In some cases, the sample entry name may also indicate that the tracks do not include either an aggregator or an extractor. In some implementations, the identifier may be a file type, and the file type may be included in the output file. For example, the file type may be specified in a field called "compatible_brands" that is specified in a box called "FileTypeBox."

In some implementations, the process 600 may include a restriction that the file be generated without a track content information (tcon) box. The tcon box may not be necessary when each track in the file includes at most on layer.

In some implementations, the process 600 may further include generating an Operating Point Information (oinf) box for the output file. The oinf box may include a list of operating points available in the multi-layer video data. Each operating point may be associated with one or more layers, and the oinf box may indicate which tracks in the file include the layer(s) for each operating point.

In some implementations, the multi-layer video data may include a subset of layers, where a subset of layers includes one or more temporal sub-layers. The multi-layer video data may include temporal sub-layers when the video data has been encoded at different frames per second. In these implementations, the process 600 may include generating the output file such in accordance with the restriction that each track includes at most one layer or one subset of layers.

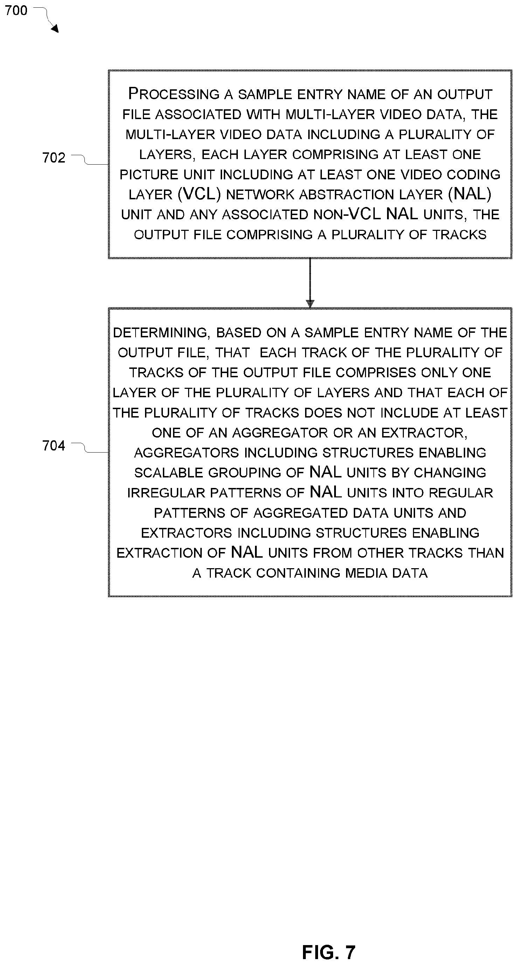

FIG. 7 illustrates an example of a process 700 for decoding video data that has been formatted according to the various implementations described above. In various implementations, the process 700 may be performed by a computing device or apparatus, such as the decoder device 112 illustrated in FIG 1. For example, the computing device or apparatus may include a decoder, a player, or a processor, microprocessor, microcomputer, or other component of a decoder or player that is configured to carry out the steps of process 700.

Process 700 is illustrated as a logical flow diagram, the operation of which represent a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, the process 700 may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory.

At step 702, the process 700 may processes a sample entry name of an output file associated with multi-layer video data. The multi-layer video data may include a plurality of layers, each layer comprising at least one picture unit including at least one video coding layer (VCL) network abstraction layer (NAL) unit and any associated non-VCL NAL units. The output file may comprise a plurality of tracks.

At step 704, the process 700 may determine, based on a sample entry name of the output file, that each track of the plurality of tracks of the output file comprises at most one layer of the plurality of layers. The process 700 may further determine that each of the plurality of tracks does not include at least one of an aggregator or an extractor. As noted above, aggregators include structures enabling scalable grouping of NAL units by changing irregular patterns of NAL units into regular patterns of aggregated data units and extractors include structures enabling extraction of NAL units from other tracks than a track containing media data.

In some implementations, the sample entry name may be a file type that is included in the output file. For example, the file type may be specified in a field called "compatible_brands" that is specified in a box called "FileTypeBox."

In some implementations, the output file may not include a Track Content Information (tcon) box. In these implementations, the contents of each track may be specified in the track itself.

In some implementations, the output file may include a layer identifier for each track. The layer identifier may identify the layer that is included in each track. For example, the layer identifier may indicate that a specific track includes a layer that contains the video data encoded at 720p resolution.

In some implementations, the output file may include an Operating Point Information (oinf) box. The oinf box may include a list of operating points included the multi-layer video data. Each operating point may be associated with one or more layers. The oinf box may indicate which of the track in the output file contain the layers that are associated with each operating point.

In some implementations, the multi-layer video data may include a subset of layers. A subset of layers may include one or more temporal sub-layers (e.g., a 30 fps or 60fps encoding). In this implementations, the tracks in the output file may include at most one layer or one subset of layers from the multi-layer video data.

### I. EXAMPLE EMBODIMENTS

Examples of the various implementations described above are provided in this section. In the text of these implementations, text changes show the proposed modification relative to the text in "Information technology - Coding of audio-visual objects - Part 15: Carriage of network abstraction layer (NAL) unit structured video in the ISO base media file format," ISO/IEC JTC 1/SC 29, ISO/IEC FDIS 14496-15:2014(E), which is available at http://phenix.int-evry.fr/mpeg/doc_end_user/documents/111_Geneva/wg11/w15182-v2-w15182.zip. In particular, additions are shown in underlined text (example of addition) and deletions are shown in strikethrough .

### A. FIRST EXAMPLE EMBODIMENT

This section describes the detail modifications to accommodate the implementations described above.

### 9. SHVC/MV-HEVC elementary stream and sample definitions.

### 9.1 Introduction

This clause specifies the storage format of SHVC or MV-HEVC data. It extends the definitions of the storage format of HEVC in clause 8. HVC and MV-HEVC both use the same layered design. This clause uses a generic name, layered-HEVC (L-HEVC), for all HEVC extensions that use the same layered design.

The file format for storage of L-HEVC content, as defined in this clause uses the existing capabilities of the ISO base media file format and the plain HEVC file format (i.e. the file format specified in clause 8). In addition, the following structures or extensions, among others, to support L-HEVC-specific features are used:
a) HEVC compatibility:
   a provision for storing an L-HEVC bitstream in an HEVC compatible manner, such that the HEVC compatible base layer can be used by any plain HEVC file format compliant reader.
b) AVC compatibility
   a provision for storing an L-HEVC bitstream in an AVC compatible manner, such that an AVC compatible base layer can be used by any plain AVC file format compliant reader.

An L-HEVC bitstream is a collection of layers where each layer helps to scale the visual presentation in quality, resolution, frame rate, views, depth, and so on. L-HEVC layers are identified by their layer identifier (L-id), which must be unique among the set of layers including and associated with its base layer; the base layer is included in the track linked by the 'sbas' track reference.

A collection of related layers is grouped together as a *layer set.* A layer may be a member of one or more layer sets. NAL units belonging to a layer can be further partitioned based on their *temporal identifier* (T-id). Each such partition is called a *sub-layer.*

One, some, or all of the layers in a layer-set can be marked for output. An output layer set is a layer set for which the output layers are indicated. An *output layer* set adheres to some specified *profile, level,* and *tier* constraints. Output layer sets associated with a range of T-id values from 0 to a selected maximum T-id value, inclusive, is called an *operating* point. An operating point represents a portion of an L-HEVC bit stream which can be obtained by *sub-bitstream extraction process.* Every valid operating point can be decoded independently of other operating points.

The L-HEVC file format stores each layers in a track.

A player uses an operating point that is signaled in 'oinf' box, the player must reconstruct L-HEVC access units as specified in 9.7.2 before passing them to the L-HEVC decoder.

### 9.2 Overview of L-HEVC Storage

The storage of L-HEVC bit streams is supported by structures such as the sample entry and operating point information ('oinf') box. The structures within a sample entry provide information for the decoding or use of the samples, in this case coded video information, that are associated with that sample entry. The oinf box records information about operating points such as the layers and sub-layers that constitute the operating point, dependencies (if any) between them, the profile, level, and tier parameter of the operating point, and other such operating point relevant information. The information in the 'oinf' box combined with using track reference to find tracks, is sufficient for a reader to choose an operating point in accordance with its capabilities, identify the tracks that contain the relevant layers needed to decode the chosen operating point, and efficiently extract sub-bitstreams in the operating point.

### 9.3 L-HEVC Track Structure

L-HEVC streams are stored in accordance with 8.2, with the following definition of an L-HEVC video elementary stream:
- **An L-HEVC video elementary streams** shall contain all video coding related NAL units (i.e. those NAL units containing video data or signaling video structure) with nuh_layer_id greater than or equal to 0 and may contain non-video coding related NAL units such as SEI messages and access unit delimiter NAL units. Other types of NAL units that are not expressly prohibited may be present, and if they are unrecognized they should be discarded by the file parser.

### 9.4 Use of the plain HEVC File Format

The L-HEVC file format is an extension of the plain HEVC file format defined in clause 8. The base layer of L-HEVC, if coded using the HEVC specification, shall conform to the HEVC file format as specified in this standard.

### 9.5 Use of the plain AVC File Format

The L-HEVC file format supports a hybrid codec configuration where the base layer is coded using an AVC encoder. The base layer of L-HEVC, if coded using the AVC specification, shall conform to the AVC file format as specified in this standard.

### 9.6 Sample and configuration definition

### 9.6.1 Introduction

An L-HEVC sample is a collection of picture units; a picture unit contains VCL and associated non-VCL NAL units of a coded picture in an L-HEVC access unit. An access unit is defined in ISO/IEC 23008-2. A sample of a track contains picture units of only those layers that are contained in the track.

### 1.6.2 Canonical Order and Restrictions

The following restrictions apply to L-HEVC data in addition to the requirements in clause 8.3.2.
- **VCL NAL units:** All VCL NAL units within one access unit and belonging to the layers contained in a track shall be contained in the sample that has same composition time as that of the pictures represented by the access unit. After resolution of extractors, an L-HEVC sample shall contain at least one VCL NAL unit.
- **Carriage of AVC coded base layer track:** An AVC coded base layer shall always be carried in a track of its own, and shall consist of AVC samples as specified in this International Standard.

### 9.6.3 Decoder Configuration Record

When the decoder configuration record defined in clause 8.3.3.1 is used for a stream that can be interpreted as either an L-HEVC or HEVC stream, the HEVC decoder configuration record shall apply to the HEVC compatible base layer, and should contain only parameter sets needed for decoding the HEVC base layer.

The LHEVCDecoderConfigurationRecord is structurally similar to the HEVCDecoderConfigurationRecord except for some additional fields. The syntax is as follows:

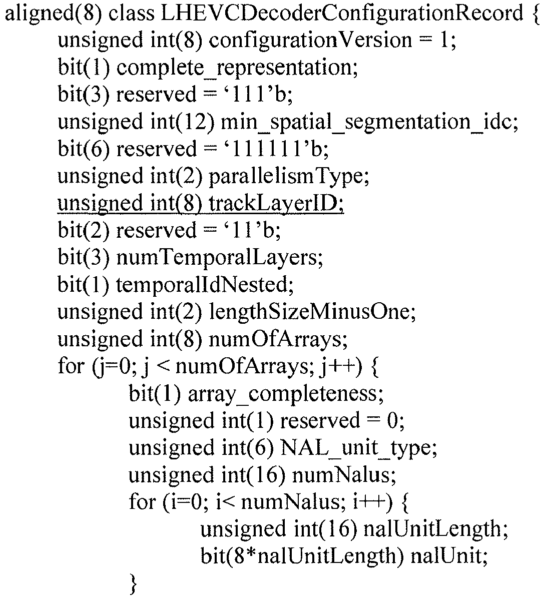

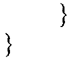

The semantics of the fields that are common to LHEVCDecoderConfigurationRecord and HEVCDecoderConfigurationRecord remain unchanged. The additional fields of LHEVCDecoderConfigurationRecord have the following semantics.

complete_representation: When this flag is set, it indicates that this track contains portion of the L-HEVC bitstream that forms a part of a complete set of encoded information. Tracks where this flag is unset may be removed without any loss of the originally encoded data.

NOTE A track may represent more than one output layer set.

NOTE For each auxiliary picture layer included in the track, it is recommended to include, within nalUnit, an SEI NAL unit containing a declarative SEI message, such as the depth representation information SEI message for depth auxiliary picture layers, specifying characteristics of the auxiliary picture layer.

trackLayerId: Specifies the value of the nuh_layer_id of VCL NALUs contained in this track.

### 9.7 Derivation from the ISO base media file format

### 9.7.1 L-HEVC track structure

An L-HEVC stream is represented by one or more video tracks in a file. Each track represents one layers of the coded bitstream.

There is a minimal set of one or more tracks that, when taken together, contain the complete set of encoded information. All these tracks shall have the flag "complete_representation" set in all their sample entries. This group of tracks that forms the complete encoded information are called the "complete subset". The complete encoded information can be retained when the tracks included in the "complete subset" are retained; all other tracks shall represent subsets, copies or re-orderings of the complete subset.

Let the lowest operating point be the one of all the operating points that contains NAL units with nuh_layer_id equal to 0 only and TemporalId equal to 0 only. For a given stream, exactly one track that contains the lowest operating point shall be nominated as the 'scalable base track'.

For an L-HEVC bitstream with a non-HEVC coded base layer, the base layer is the lowest operating point, and always assigned one track of its own and is nominated as the base track. All the other tracks that are part of the same stream shall be linked to their base track by means of a track reference of type 'sbas'.

All the tracks sharing the same scalable base track must share the same timescale as the scalable base track.

If a layer represented by a track uses another layer represented by another track for inter-layer prediction reference, a track reference of type 'scal' shall be included in the track referring to the source track for inter-layer prediction.

NOTE If a track containing parts of an L-HEVC bitstream is removed from a file, tracks that contain 'scal' and 'sbas' track references to the removed track should also be removed.

When the base layer is coded using AVC, the base layer track shall be constructed according to clause 5 without using separate parameter set tracks.

### 9.7.2 Reconstruction of an access unit

In order to reconstruct an access unit from samples of one or more L-HEVC tracks, the target output layers and the operating point they belong to may need to be determined first.

NOTE Players can conclude the layers that are required for decoding the determined target output layers from operating point list included in the Operating Point Information box. Tracks that carry the relevant layers for an operating point can be obtained by following the 'scal' track references and the layer ID of each track in the sample entry description.

If several tracks contain data for the access unit, the alignment of respective samples in tracks is performed based on the sample decoding times, i.e. using the time-to-sample table only without considering edit lists.

An access unit is reconstructed from the respective samples in the required tracks by arranging their NAL units in an order conforming to ISO/IEC 23008-2. The following order provides an informative outline of the procedure to construct a conforming access unit from samples:
- When present, the picture unit (as specified in ISO/IEC 23008-2) with VCL NAL units having nuh_layer_id equal to 0, excluding the end of bitstream NAL unit.
- Picture units (as specified in ISO/IEC 23008-2) from any respective sample in increasing order of the nuh_layer_id value.
- When present, the end of bitstream NAL unit.

### 9.7.3 L-HEVC video stream definition

### 9.7.3.1 Sample entry name and format

### 9.7.3.1.1 Definition

Types: 'hvc1', 'hev1', 'lhv1', 'lhe1', 'lhvC'
Container: Sample Description Box ('stsd')
Mandatory: An 'hvc1', 'hev1', 'lhv1', or 'lhe1' sample entry is mandatory
Quantity: One or more sample entries may be present

When the sample entry name is 'lhv1', the default and mandatory value of array_completeness is 1 for arrays of all types of parameter sets, and 0 for all other arrays. When the sample entry name is 'lhe1', the default value of array_completeness is 0 for all arrays.

When the sample entry name is 'lhe1', the following applies:
- If a sample contains at least one IRAP picture as defined in ISO/IEC 23008-2, each parameter set needed for decoding the IRAP pictures and the following pictures in decoding order in each layer that contains an IRAP picture in the sample shall be included either in the sample entries of the tracks carrying layers present in this sample or in that sample itself (possibly by using extractors).
- Otherwise (the sample contains no IRAP picture), each parameter set needed for decoding that sample shall be included either in the sample entries of the tracks carrying layers present in this sample or in any of the samples since the previous sample containing at least one IRAP picture to that sample itself (possibly by using extractors), inclusive.

If the samples of a track contain an HEVC compatible base layer, then an 'hvc1' or, 'hev1' sample entry shall be used. Here, the entry shall contain initially an HEVC Configuration Box, possibly followed by an L-HEVC Configuration Box as defined below. The HEVC Configuration Box documents the Profile, Tier, Level, and possibly also parameter sets of the HEVC compatible base layer as defined by the HEVCDecoderConfigurationRecord. The L-HEVC Configuration Box possibly documents parameter sets of the L-HEVC compatible enhancement layers as defined by the LHEVCDecoderConfigurationRecord, stored in the L-HEVC Configuration Box.

NOTE When composing a file, caution should be taken that the PTL in the VPS base (i.e. the first PTL structure in a VPS) might be "greater" than the PTL of the base layer that should be included in HEVCDecoderConfigurationRecord. Rather, the PTL information in the first PTL structure in the VPS extension is what should be included in HEVCDecoderConfigurationRecord.

If the samples of a track do not contain an HEVC base layer, then the sample entry type 'lhv1', or 'lhe1' shall be used and the sample entry shall contain an L-HEVC Configuration Box, as defined below. This includes an LHEVCDecoderConfigurationRecord, as defined in this International Standard.

The lengthSizeMinusOne field in the L-HEVC and HEVC configurations in any given sample entry of L-HEVC and HEVC tracks sharing the same base track shall have the same value.

An LHEVCConfigurationBox may be present in an 'hvc1' or, 'hev1' sample entry. In this case the HEVCLHVCSampleEntry definition below applies.

The following table shows for a video track all the possible uses of sample entries, configurations and the L-HEVC tools:

**Table 10 - Use of sample entries for HEVC and L-HEVC tracks**

| **sample entry name** | **with configuration records** | **Meaning** |
|---|---|---|
| 'hvc1' or 'hev1' | HEVC Configuration Only | A plain HEVC track without NAL units with nuh_layer_id greater than 0; Extractors and aggregators shall not be present. |
| 'lhv1', 'lhe1' | L-HEVC Configuration Only | An L-HEVC track containing NAL units of a particular layer with nuh_layer_id greater than 0; Extractors and aggregators shall not be present. |

### 9.7.3.1.2 Syntax

```
        class LHEVCConfigurationBox extends Box('lhvC') {
             LHEVCDecoderConfigurationRecord() LHEVCConfig; }
        class HEVCLHVCSampleEntry() extends HEVCSampleEntry() {
             LHEVCConfigurationBox lhvcconfig;
             MPEG4ExtensionDescriptorsBox (); // optional
             Box extra_boxes[]; // optional }
        // Use this if track is not HEVC compatible
        class LHEVCSampleEntry() extends VisualSampleEntry ('lhv1', or 'lhe1') {
             LHEVCConfigurationBox lhvcconfig;
             MPEG4ExtensionDescriptorsBox (); // optional
             Box extra_boxes[]; }
```

### 9.7.3.1.3 Semantics

When the stream to which the sample entry applies contains NAL units with nuh_layer_id greater than 0, Compressorname in the base class VisualSampleEntry indicates the name of the compressor used with the value "\014LHEVC Coding" being recommended (\014 is 12, the length of the string "LHEVC Coding" in bytes).

### 9.7.4 L-HEVC visual width and height

The visual width and height documented in a VisualSampleEntry of a stream containing NAL units of a particular nuh_layer_id shall be the visual width and height, respectively.

### 9.7.5 Sync sample

An L-HEVC sample is considered as a sync sample if the base layer picture in the access unit is an IRAP picture as defined in ISO/IEC 23008-2. Sync samples are documented by the sync sample table, and may be additionally documented by the stream access point 'sap' sample group.

### 9.7.6 Stream Access Point sample group

The 'sync' box provides indication of only one type of random access possible in an L-HEVC media stream. There are many other types of random access possible. Annex I of ISO/IEC 14496-12 provides a significant discussion of the different types of random access. Locations in the bit stream where random access is possible are called stream access points (SAP). Annex I specifies six types of SAPs with different characteristics. To provide information of all different types of SAPs, a stream access sample group 'sap' specified in ISO/IEC 14496-12 is used.

The 'sap' sample grouping when used in the context of L-HEVC shall set layer_id_method_idc value to 1.

The field target_layers is 28 bits in length. Each bit in the field represents a layer carried in the track. Since this field is only 28 bits in length, the indication of SAP points in a track is constrained to a maximum of 28 layers. Each bit of this field starting from the LSB shall be mapped to the list of layer IDs signalled in the Track Content Information Box ('tcon') in ascending order of layer IDs.

For example, if a track carries layer with layer IDs 4, 10, and 29, then the layer ID 4 is mapped to the least significant bit, the layer ID 10 is mapped to the second least significant bit, and the layer ID 29 maps to the third least significant bit. A value of one in the bit signals that in the sample the mapped layer has a picture that is a SAP of some type. In the previous example the following table give an example of layer specific SAP information.

**Table 11 - Bit pattern for the target_layer field of the 'sap' sample grouping for an example use case described above**

| **Bit pattern of target layers (LSB right most bit)** | **layer IDs (among 4, 10, 29) of SAPs** |
|---|---|
| 000000000000000000000010 | {10} |
| 000000000000000000000100 | {29} |
| 000000000000000000000101 | {29, 4} |

The type is resolved by following the group_description_index of the sample in the SampleToGroup box.

### 9.7.7 Sample groups on random access recovery points and random access points

For video data described by a sample entry of type 'hvc1' or, 'hev1', the random access recovery sample group and the stream access point sample group identify random access recovery points and random access points, respectively, for both an HEVC decoder, and an L-HEVC decoder (if any) operating on the entire bitstream.

For video data described by an L-HEVC sample entry type, the random access recovery sample group identifies random access recovery points in the track that contains it

An L-HEVC sample is considered as a random access point if coded pictures in the sample is an IRAP picture (with or without RASL pictures) as defined in ISO/IEC 23008-2, and the leading samples in ISO/IEC 14496-12 are samples in which all pictures are RASL pictures as defined in ISO/IEC 23008-2.

### 9.7.8 Independent and disposable samples box

If the independent and disposal samples box is used in a track which is both HEVC and L-HEVC compatible, then care should be taken that the information provided by this box is true no matter what valid subset of the L-HEVC data (possibly only the HEVC data) is used. The 'unknown' values (value 0 of the fields sample-depends-on, sample-is-depended-on, and sample-has-redundancy) may be needed if the information varies.

### 9.7.9 Definition of a sub-sample for L-HEVC

This subclause extends the definition of sub-sample of HEVC in 8.4.8.

For the use of the sub-sample information box (clause 8.7.7 of ISO/IEC 14496-12) in an L-HEVC stream, a sub-sample is defined on the basis of the value of the flags of the sub-sample information box as specified below. The presence of this box is optional; however, if present in a track containing L-HEVC data, it shall have the semantics defined here.

flags has the same semantics as in 8.4.8

The subsample_priority field and the discardable field shall be set as specified in 8.4.8.

When the first byte of a NAL unit is included in a sub-sample, the preceding length field must also be included in the same sub-sample.

```
             if(flags == 0) {
                   unsigned int(1) SubLayerRefNalUnitFlag;
                   unsigned int(1) RapNalUnitFlag;
                   unsigned int(1) VclNalUnitFlag;
                   unsigned int(1) DiscardableFlag;
                   unsigned int(1) NoInterLayerPredFlag;
                   unsigned int(3) Templd;
                   unsigned int(24) reserved = 0;
             } else if(flags == 1)
                   unsigned int(32) reserved = 0;
             else if(flags == 2) {
                   unsigned int(2) vcl_idc;
                   unsigned int(2) reserved = 0;
                   unsigned int(4) log2_min_luma_ctb;
                   unsigned int(12) ctb_x;
                   unsigned int(12) ctb_y;
             } else if(flags == 3 ∥ flags == 4) {
                   unsigned int(2) vcl_idc;
                   unsigned int(30) reserved = 0;
             }
```

The semantics of SubLayerRefNalUnitFlag, RapNalUnitFlag, VclNalUnitFlag, vcl_idc, log2_min_luma_ctb, ctb_x, and ctb_y are the same as in 8.4.8.

DiscardableFlag indicates the discardable_flag value of the VCL NAL units in the sub-sample. All the VCL NAL units in the sub-sample shall have the same discardable_flag value.

NOTE This is not the same definition as the discardable field in the sub-sample information box.

NoInterLayerPredFlag indicates the value of the inter_layer_pred_enabled_flag of the VCL NAL units in the sub-sample. All the VCL NAL units in the sub-sample shall have the same value of inter_layer_pred_enabled_flag.

TempId indicates the TemporalId value of the NAL units in the sub-sample. All the NAL units in the sub-sample shall have the same TemporalId value.

### 9.7.10 Handling non-output samples

What is specified in 8.4.9 is not always applicable when multiple layers are involved. If what is specified in 8.4.9 cannot be followed, then the sample is discarded and the duration of the previous sample is extended, so that the following samples have correct composition timing.

### 9.7.11 Indication of hybrid codec scalability

When a multi-layer HEVC bitstream uses an external base layer (i.e., when an active VPS of an HEVC bitstream has vps_base_layer_internal_flag equal to 0 and vps_base_layer_available_flag equal to 1), Sample Auxiliary Information with aux_info_type equal to 'lhvc' and aux_info_type_parameter equal to 0 shall be provided for a track that may use the external base layer as a reference for inter-layer prediction. Storage of sample auxiliary information shall conform to ISO/IEC 14496-12.

The syntax of the sample auxiliary information with aux_info_type equal to 'lhvc' is as follows:

```
        aligned(8) class LhvcSampleAuxiliaryDataFormat {
             unsigned int(1) bl_pic_used_flag;
             unsigned int(1) bl_irap_pic_flag;
             unsigned int(6) bl_irap_nal_unit_type;
             signed int(8) sample_offset; }
```

The semantics of the sample auxiliary information with aux_info_type equal to 'lhvc' are specified below. In the semantics, the term current sample refers to the sample that this sample auxiliary information is associated with and should be provided for the decoding of the sample.

bl_pic_used_flag equal to 0 specifies that no decoded base layer picture is used for the decoding of the current sample. bl_pic_used_flag equal to 1 specifies that a decoded base layer picture may be used for the decoding of the current sample.

bl_irap_pic_flag specifies, when bl_pic_used_flag is equal to 1, the value of the BlIrapPicFlag variable for the associated decoded picture, when that decoded picture is provided as a decoded base layer picture for the decoding of the current sample.

bl_irap_nal_unit_type specifies, when bl_pic_used_flag is equal to 1 and bl_irap_pic_flag is equal to 1, the value of the nal_unit_type syntax element for the associated decoded picture, when that decoded picture is provided as a decoded base layer picture for the decoding of the current sample.

sample_offset gives, when bl_pic_used_flag is equal to 1, the relative index of the associated sample in the linked track. The decoded picture resulting from the decoding of the associated sample in the linked track is the associated decoded picture that should be provided for the decoding of the current sample. sample_offset equal to 0 specifies that the associated sample has the same, or the closest preceding, decoding time compared to the decoding time of the current sample; sample_offset equal to 1 specifies that the associated sample is the next sample relative to the associated sample derived for sample_offset equal to 0; sample_offset equal to -1 specifies that the associated sample is the previous sample relative to the associated sample derived for sample_offset equal to 0, and so on.

### 9.8 L-HEVC specific information boxes

The following boxes specify information that relates to multiple layers of an L-HEVC elementary stream. As there may be multiple layers in the L-HEVC elementary stream that may be chosen for output, the information carried in these boxes is not specific to any single track.

### 9.8.1 The Operating Points Information Box ('oinf')

### 9.8.1.1 Definition

Box Type: 'oinf'
Container: MediaInformationBox ('minf') of the 'oref' type referenced track
Mandatory: Yes in one and only one track of an L-HEVC bit stream
Quantity: One

Applications are informed about the different operating points and their constitution by using the Operating Points Information Box ('oinf'). Each operating point is related to an output layer set, a max T-ID value, and a profile, level and tier signaling. All these information is captured by the 'oinf' box. Apart from these information, this box also provides the dependency information between layers, the types of scalabilities coded in the L-HEVC bit stream, and the dimension identifiers that relate to any particular layer for a given scalability type.

For a set of L-HEVC or HEVC tracks with a common 'sbas' track reference, there shall be only one track among this set that carries the 'oinf' box. All tracks with a common 'sbas' referenced track shall have a track reference of type 'oref' to the track that carries the 'oinf' box.

When this box is present, there shall be only one VPS in the track.

### 9.8.1.2 Syntax

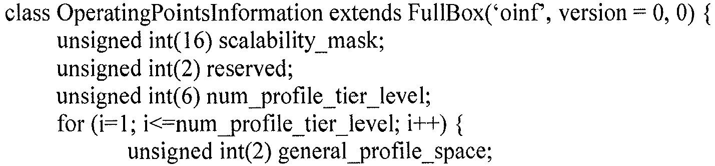

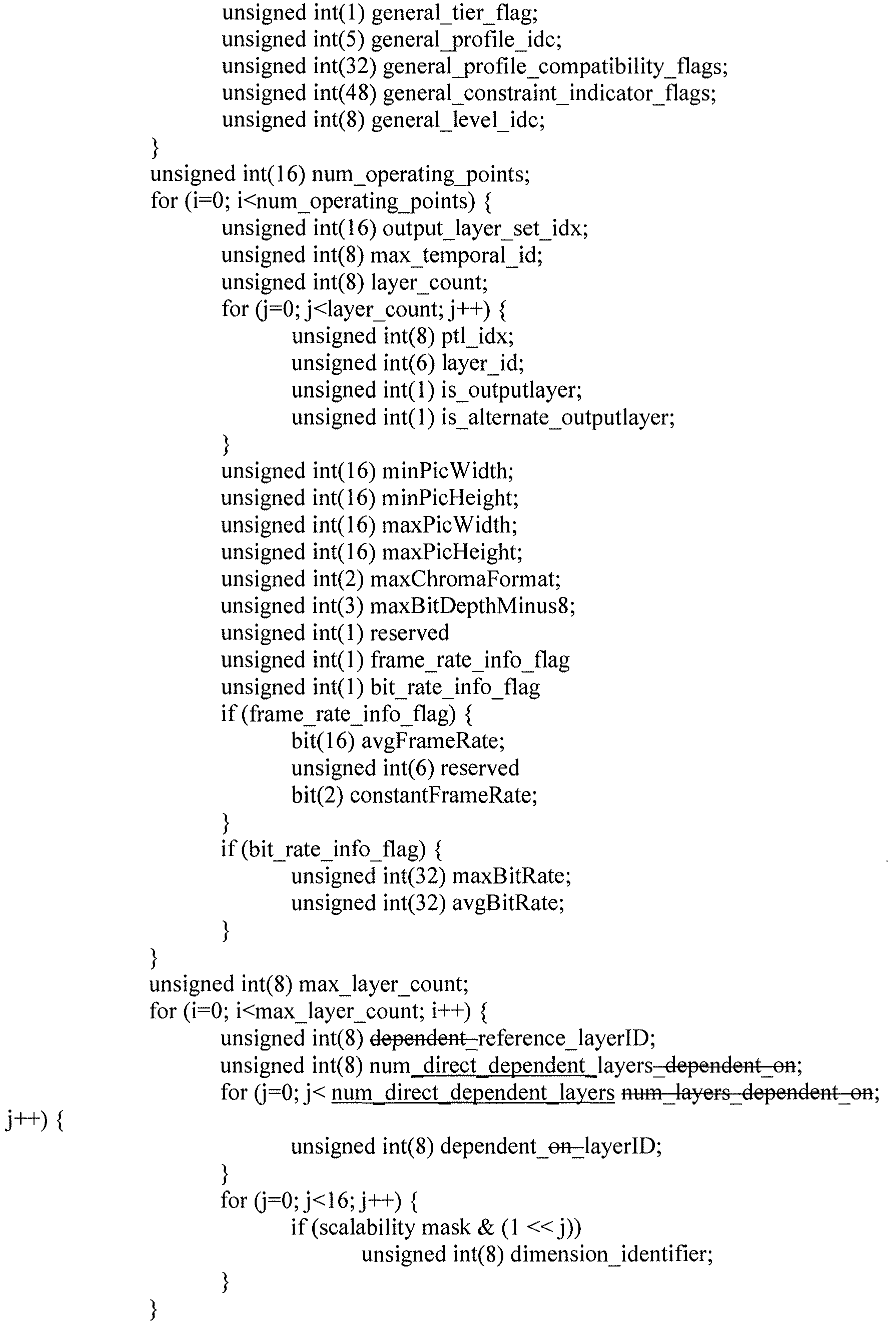

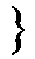

### 9.8.1.3 Semantics

scalability_mask: This field indicates the scalability types that are represented by all the layers related to the base track to which this box is associated (i.e., either this track or the track pointed to by an 'sbas' reference). Each bit in the scalability_mask field denotes a scalability dimension as coded in the scalability_mask_flag of the VPS extension syntax as defined in ISO/IEC 23008-2. A one in a bit position indicates that the scalability dimension is present.

num_profile_tier_level: Gives the number of following profile, tier, and level combinations as well as the associated fields.

general_profile_space, general_tier_flag, general_profile_idc, general_profile_compatibility_flags, general_constraint_indicator_flags, and general_level_idc are defined in ISO/IEC 23008-2.

num_operating_points: Gives the number of operating points for which the information follows.

output_layer_set_idx is the index of the output layer set that defines the operating point. The mapping between output_layer_set_idx and the layer_id values shall be the same as specified by the VPS for an output layer set with index output_layer_set_idx.

max_temporal_id: Gives the maximum TemporalId of NAL units of this operating point.

layer_count: This field indicates the number of necessary layers, as defined in ISO/IEC 23008-2, of this operating point.

ptl_idx: Signals the one-based index of the listed profile, level, and tier flags for a layer with identifier equal to layer_id. When the value of ptl_idx equals zero for a layer, that layer shall be assumed to have no profile, level, and tier signalled and that layer shall not be an output layer or a layer that is a direct or indirect reference layer of any output layer of the operating point.

layer_id: provides the layer ID values for the layers of the operating point.

is_outputlayer: A flag that indicates if the layer is an output layer or not. A one indicates an output layer.

is_alternate_outputlayer: This flag when set indicates that this layer can be considered as an alternate output layer for this operating point. This flag is set to one if and only if one layer in the operating point has its is_outputlayer flag set.

minPicWidth specifies the least value of the luma width indicators as defined by the pic_width_in_luma_samples parameter in ISO/IEC 23008-2 for the stream of the operating point.

minPicHeight specifies the least value of the luma height indicators as defined by the pic_height_in_luma_samples parameter in ISO/IEC 23008-2 for the stream of the operating point.

maxPicWidth specifies the greatest value of the luma width indicators as defined by the pic_width_in_luma_samples parameter in ISO/IEC 23008-2 for the stream of the operating point.

maxPicHeight specifies the greatest value of the luma height indicators as defined by the pic_height_in_luma_samples parameter in ISO/IEC 23008-2 for the stream of the operating point.

maxChromaFormat specifies the greatest value of the chroma_format indicator as defined by the chroma_format_idc parameter in ISO/IEC 23008-2 for the stream of the operating point.

maxBitDepthMinus8 specifies the greatest value of the luma and chrom bit depth indicators as defined by the bit_depth_luma_minus8 and bit_depth_chroma_minus8 parameters, respectively, in ISO/IEC 23008-2 for the stream of the operating point.

frame_rate_info_flag equal to 0 indicates that no frame rate information is present for the operating point. The value 1 indicates that frame rate information is present for the operating point.

bit_rate_info_flag equal to 0 indicates that no bitrate information is present for the operating point. The value 1 indicates that bitrate information is present for the operating point.

avgFrameRate gives the average frame rate in units of frames/(256 seconds) for the operating point. Value 0 indicates an unspecified average frame rate.

constantFrameRate equal to 1 indicates that the stream of the operating point is of constant frame rate. Value 2 indicates that the representation of each temporal layer in the stream of the operating point is of constant frame rate. Value 0 indicates that the stream of the operating point may or may not be of constant frame rate.

maxBitRate gives the maximum bit rate in bits/second of the stream of the operating point, over any window of one second.

avgBitRate gives the average bit rate in bits/second of the stream of the operating point.

max_layer_count: The count of all unique layers in all of the operating points that relate to this associated base track.

reference_layerID: nuh_layer_id of a layer that is directly referred by layer specified by dependent_layerID

num direct_dependent_layers: Number of layers on which a layer with nuh_layer_id equal to dependent_layerID is directly dependent on the layer with nuh_layer_id equal to reference_layerID.

dependent_layerID: nuh_layer_id of the layer on which a layer with nuh_layer_id equal to dependent_layerID is directly dependent on the layer with nuh_layer_id equal to reference_layerID.

NOTE If a track containing parts of an L-HEVC bitstream is removed from a file, tracks that contain layers that depends on the layer contained in the removed track should also be removed.

dimension_identifier: Set to the value of the dimension_id field as specified in the VPS extension syntax as defined in ISO/IEC 23008-2.

### B. SECOND EXAMPLE EMBODIMENT

This section describes modifications to accommodate various implementations described above.

### 9. SHVC/MV-HEVC elementary stream and sample definitions.

### 9.1 Introduction

This clause specifies the storage format of SHVC or MV-HEVC data. It extends the definitions of the storage format of HEVC in clause 8. HVC and MV-HEVC both use the same layered design. This clause uses a generic name, layered-HEVC (L-HEVC), for all HEVC extensions that use the same layered design.

The file format for storage of L-HEVC content, as defined in this clause and Annex A to Annex D uses the existing capabilities of the ISO base media file format and the plain HEVC file format (i.e. the file format specified in clause 8). In addition, the following structures or extensions, among others, to support L-HEVC-specific features are used:
a) Aggregator:
   a structure to enable efficient scalable grouping of NAL units by changing irregular patterns of NAL units into regular patterns of aggregated data units.
b) NOTE: When compared to Aggregators for AVC/SVC/MVC, the syntax and semantics of the NAL unit header syntax element in the L-HEVC aggregator have been modified and the scope of the aggregator has been constrained.
c) Extractor:
   a structure to enable efficient extraction of NAL units from other tracks than the one containing the media data.
   NOTE: When compared to Extractors for AVC/SVC/MVC, the syntax and semantics of the NAL unit header of L-HEVC Extractors have been modified.
d) HEVC compatibility:
   a provision for storing an L-HEVC bitstream in an HEVC compatible manner, such that the HEVC compatible base layer can be used by any plain HEVC file format compliant reader.
e) AVC compatibility
   a provision for storing an L-HEVC bitstream in an AVC compatible manner, such that an AVC compatible base layer can be used by any plain AVC file format compliant reader.

An L-HEVC bitstream is a collection of layers where each layer helps to scale the visual presentation in quality, resolution, frame rate, views, depth, and so on. L-HEVC layers are identified by their layer identifier (L-id), which must be unique among the set of layers including and associated with its base layer; the base layer is included in the track linked by the 'sbas' track reference.

A collection of related layers is grouped together as a *layer set.* A layer may be a member of one or more layer sets. NAL units belonging to a layer can be further partitioned based on their *temporal identifier* (T-id). Each such partition is called a *sub-layer.*

One, some, or all of the layers in a layer-set can be marked for output. An *output layer* set is a layer set for which the output layers are indicated. An output layer set adheres to some specified *profile, level,* and *tier* constraints. Output layer sets associated with a range of T-id values from 0 to a selected maximum T-id value, inclusive, is called an *operating point.* An operating point represents a portion of an L-HEVC bit stream which can be obtained by *sub-bitstream extraction process.* Every valid operating point can be decoded independently of other operating points.

The support for L-HEVC includes a number of tools, and there are various 'models' of how they might be used. In particular, an L-HEVC stream can be placed in tracks in a number of ways, among which are the following:
1. each layer in its own track;
2. the expected operating points each in a track (e.g. the HEVC base, a stereo pair, a multiview scene).

The L-HEVC file format stores each layers into a track. An L-HEVC operating point may be implicitly represented by a track, i.e., each sample in the track contains an access unit, where some or all NAL units of the access unit may be contained in or referred to by extractor and aggregator NAL units. If the number of operating points is large, it may be space-consuming and impractical to create a track for each operating point.

When an L-HEVC bitstream is stored in tracks without exractor and aggregator NAL units and a player uses an operating point that is explicitly signaled in the 'oinf' box , the player must reconstruct L-HEVC access units as specified in 9.7.2 before passing them to the L-HEVC decoder.

### 9.2 Overview of L-HEVC Storage

The storage of L-HEVC bit streams is supported by structures such as the sample entry and operating point information ('oinf') box. The structures within a sample entry provide information for the decoding or use of the samples, in this case coded video information, that are associated with that sample entry. The oinf box records the profile, tier and level of layers of each operating point and optionally other such operating point relevant information. The information signaled in the 'oinf' box combined with using track reference to find tracks, is sufficient for a reader to choose an operating point in accordance with its capabilities, identify the tracks that contain the relevant layers needed to decode the chosen operating point, and efficiently extract sub-bitstreams in the operating point.

### 9.3 L-HEVC Track Structure

L-HEVC streams are stored in accordance with 8.2, with the following definition of an L-HEVC video elementary stream:
- **An L-HEVC video elementary streams** shall contain all video coding related NAL units (i.e. those NAL units containing video data or signaling video structure) with a particular nuh_layer_id that is greater than 0 and may contain non-video coding related NAL units such as SEI messages and access unit delimiter NAL units. Furthermore, Aggregators (see A.2) or Extractors (see A.3) may be present. Aggregators and Extractors shall not be directly output by file parsers. Other types of NAL units that are not expressly prohibited may be present, and if they are unrecognized they should be discarded by the file parser.

### 9.4 Use of the plain HEVC File Format

The L-HEVC file format is an extension of the plain HEVC file format defined in clause 8. The base layer of L-HEVC, if coded using the HEVC specification, shall conform to the HEVC file format as specified in this standard.

### 9.5 Use of the plain AVC File Format

The L-HEVC file format supports a hybrid codec configuration where the base layer is coded using an AVC encoder. The base layer of L-HEVC, if coded using the AVC specification, shall conform to the AVC file format as specified in this standard.

### 9.6 Sample and configuration definition

### 9.6.1 Introduction

An L-HEVC sample is a collection of picture units; a picture unit contains VCL and associated non-VCL NAL units of a coded picture in an L-HEVC access unit. An access unit is defined in ISO/IEC 23008-2. A sample of a track contains picture units of only those layers that are contained in the track.

### 9.6.2 Canonical Order and Restrictions

The following restrictions apply to L-HEVC data in addition to the requirements in clause 8.3.2.
- **VCL NAL units:** All VCL NAL units within one access unit and belonging to the layers contained in a track shall be contained in the sample that has same composition time as that of the pictures represented by the access unit. After resolution of extractors, an L-HEVC sample shall contain at least one VCL NAL unit.
- **Aggregators/Extractors:** Each aggregator is allowed to aggregate NAL units belonging to picture unit only. The order of all NAL units included in an Aggregator or referenced by an Extractor is exactly the decoding order as if these NAL units were present in a sample not containing Aggregators/Extractors. After processing the Aggregator or the Extractor, all NAL units must be in valid decoding order as specified in ISO/IEC 23008-2.
- **Carriage of AVC coded base layer track:** An AVC coded base layer shall always be carried in a track of its own, and shall consist of AVC samples as specified in this International Standard.

### 9.6.3 Decoder Configuration Record

When the decoder configuration record defined in clause 8.3.3.1 is used for a stream that can be interpreted as either an L-HEVC or HEVC stream, the HEVC decoder configuration record shall apply to the HEVC compatible base layer, and should contain only parameter sets needed for decoding the HEVC base layer.

The LHEVCDecoderConfigurationRecord is structurally similar to the HEVCDecoderConfigurationRecord except for some additional fields. The syntax is as follows:

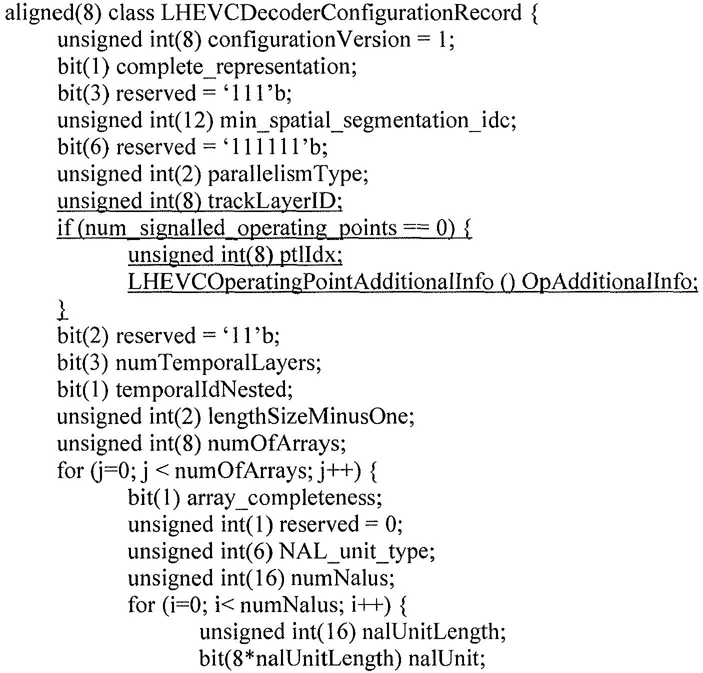

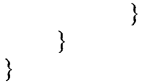

The semantics of the fields that are common to LHEVCDecoderConfigurationRecord and HEVCDecoderConfigurationRecord remain unchanged. The additional fields of LHEVCDecoderConfigurationRecord have the following semantics.

complete_representation: When this flag is set, it indicates that this track contains portion of the L-HEVC bitstream that forms a part of a complete set of encoded information. Tracks where this flag is unset may be removed without any loss of the originally encoded data.

NOTE A track may represent more than one output layer set.

NOTE For each auxiliary picture layer included in the track, it is recommended to include, within nalUnit, an SEI NAL unit containing a declarative SEI message, such as the depth representation information SEI message for depth auxiliary picture layers, specifying characteristics of the auxiliary picture layer.

trackLayerId: Specifies the value of the nuh_layer_id of VCL NALUs contained in this track.

ptlIdx: Signals the one-based index of the listed profile, level, and tier flags for the layer contained in the track. When the value of ptlIdx equals zero, the layer contained in the track shall be assumed to have no profile, level, and tier signalled and that layer shall not be an output layer or a layer that is a direct or indirect reference layer of any output layer of the operating point. When num signalled operating points is equal to 0, the value of ptlIdx shall not be equal to 0.

```
        aligned(8) class LHEVCOperatingPointAdditionalInfo {
             unsigned int(16) minPicWidth;
             unsigned int(16) minPicHeight;
             unsigned int(16) maxPicWidth;
             unsigned int(16) maxPicHeight;
             unsigned int(2) maxChromaFormat;
             unsigned int(3) maxBitDepthMinus8;
             unsigned int(1) reserved
             unsigned int(1) frame_rate_info_flag
             unsigned int(1) bit_rate_info_flag
             if (frame_rate_info_flag) {
                    bit(16) avgFrameRate;
                    unsigned int(6) reserved
                    bit(2) constantFrameRate;
             }
             if (bit_rate_info_flag) {
                    unsigned int(32) maxBitRate;
                    unsigned int(32) avgBitRate;
             }
       }
```

minPicWidth specifies the least value of the luma width indicators as defined by the pic width_in_luma_samples parameter in ISO/IEC 23008-2 for the stream of the operating point.

minPicHeight specifies the least value of the luma height indicators as defined by the pic_height_in_luma_samples parameter in ISO/IEC 23008-2 for the stream of the operating point.

maxPicWidth specifies the greatest value of the luma width indicators as defined by the pic_width_in_luma_samples parameter in ISO/IEC 23008-2 for the stream of the operating point.

maxPicHeight specifies the greatest value of the luma height indicators as defined by the pic_height_in_luma_samples parameter in ISO/IEC 23008-2 for the stream of the operating point.

maxChromaFormat specifies the greatest value of the chroma format indicator as defined by the chroma_format_idc parameter in ISO/IEC 23008-2 for the stream of the operating point.

maxBitDepthMinus8 specifies the greatest value of the luma and chrom bit depth indicators as defined by the bit_depth_luma_minus8 and bit_depth_chroma_minus8 parameters, respectively, in ISO/IEC 23008-2 for the stream of the operating point.

frame_rate_info_flag equal to 0 indicates that no frame rate information is present for the operating point. The value 1 indicates that frame rate information is present for the operating point.

bit_rate_info_flag equal to 0 indicates that no bitrate information is present for the operating point. The value 1 indicates that bitrate information is present for the operating point.

avgFrameRate gives the average frame rate in units of frames/(256 seconds) for the operating point. Value 0 indicates an unspecified average frame rate.

constantFrameRate equal to 1 indicates that the stream of the operating point is of constant frame rate. Value 2 indicates that the representation of each temporal layer in the stream of the operating point is of constant frame rate. Value 0 indicates that the stream of the operating point may or may not be of constant frame rate.

maxBitRate gives the maximum bit rate in bits/second of the stream of the operating point, over any window of one second.

avgBitRate gives the average bit rate in bits/second of the stream of the operating point.

### 9.7 Derivation from the ISO base media file format

### 9.7.1 L-HEVC track structure

An L-HEVC stream is represented by one or more video tracks in a file. Each track represents one or more layers of the coded bitstream.

There is a minimal set of one or more tracks that, when taken together, contain the complete set of encoded information. All these tracks shall have the flag "complete_representation" set in all their sample entries. This group of tracks that forms the complete encoded information are called the "complete subset". The complete encoded information can be retained when the tracks included in the "complete subset" are retained; all other tracks shall represent subsets, copies or re-orderings of the complete subset.

Let the lowest operating point be the one of all the operating points that contains NAL units with nuh_layer_id equal to 0 only and TemporalId equal to 0 only. For a given stream, exactly one track that contains the lowest operating point shall be nominated as the 'scalable base track'.

For an L-HEVC bitstream with a non-HEVC coded base layer, the base layer is the lowest operating point, and always assigned one track of its own and is nominated as the base track. All the other tracks that are part of the same stream shall be linked to their base track by means of a track reference of type 'sbas'.

All the tracks sharing the same scalable base track must share the same timescale as the scalable base track.

If a layer represented by a track uses another layer represented by another track for inter-layer prediction reference, a track reference of type 'scal' shall be included in the track referring to the source track for inter-layer prediction.

NOTE If a track containing parts of an L-HEVC bitstream is removed from a file, tracks that contain 'seal' and 'sbas' track references to the removed track should also be removed.

When the base layer is coded using AVC, the base layer track shall be constructed according to clause 5 without using separate parameter set tracks.

### 9.7.2 Data sharing and reconstruction of an access unit

Different tracks may logically share data. This sharing can take one of the following two forms:
a) The sample data is duplicated in different tracks.
b) There may be instructions on how to perform this copy at the time that the file is read. For this case, Extractors (defined in A.3) are used.

In order to reconstruct an access unit from samples of one or more L-HEVC tracks, the target output layers and the operating point they belong to may need to be determined first.

NOTE Players can conclude the layers that are required for decoding the determined target output layers from operating point list included in the Operating Point Information box or by resolving extractors and aggregators. Tracks that carry the relevant layers for an operating point can be obtained by following the 'seal' track references and information in the track contents box.

When reconstructing an access unit for an operation point explicitly listed in the 'oinf' box, the tracks required for reconstructing the access units are identified using the layers listed in this operation point, extractors and aggregators to tracks other than hvt1 or lht1 that are present in the samples shall be ignored. In this case, the alignment of respective samples in tracks is performed based on the sample decoding times, i.e. using the time-to-sample table only without considering edit lists. When reconstructing an access unit for an operation point not listed in the 'oinf' box, access units are reconstructed by resolving extractors present in the samples.

An access unit is reconstructed from the respective samples in the required tracks by arranging their NAL units in an order conforming to ISO/IEC 23008-2. The following order provides an informative outline of the procedure to construct a conforming access unit from samples:
- When present, the picture unit (as specified in ISO/IEC 23008-2) with VCL NAL units having nuh_layer_id equal to 0, excluding the end of bitstream NAL unit.
- Picture units (as specified in ISO/IEC 23008-2) from any respective sample in increasing order of the nuh_layer_id value.
- When present, the end of bitstream NAL unit.

### 9.7.3 L-HEVC video stream definition

### 9.7.3.1 Sample entry name and format

### 9.7.3.1.1 Definition

Types: 'hvc1', 'hev1', 'hvc2', 'hev2', 'mhv1', 'mhel', 'shv1', 'she1', 'mhv2', 'mhe2', 'shv2', 'she2', 'lhvC'
Container: Sample Description Box ('stsd')
Mandatory: An 'hvc1', 'hev1', 'hvc2', 'hev2', 'mhel', 'shv1', 'she1', 'mhv2', 'mhe2', 'shv2', or 'she2' sample entry is mandatory
Quantity: One or more sample entries may be present

When the sample entry name is 'mhv1', 'shv1', "mhv2'or 'shv2, the default and mandatory value of array_completeness is 1 for arrays of all types of parameter sets, and 0 for all other arrays. When the sample entry name is 'mhel', 'she1', 'mhe2 or "she2', the default value of array_completeness is 0 for all arrays.

When the sample entry name is 'mhv1', 'mhel', 'shv1' or 'she1', sample entry name of other track containing parts of an L-HEVC bitstream shall be either 'mhv1', 'mhe1', 'shv1' or 'she1'.

When the sample entry name is 'mhv2', 'mhe2', 'shv2' or 'she2', sample entry name of other track containing parts of an L-HEVC bitstream shall be either 'mhv2', 'mhe2', 'shv2' or 'she2'.

When the sample entry name is 'mhe1' or 'she1', the following applies:
- If a sample contains at least one IRAP picture as defined in ISO/IEC 23008-2, each parameter set needed for decoding the IRAP pictures and the following pictures in decoding order in each layer that contains an IRAP picture in the sample shall be included either in the sample entries of the tracks carrying layers present in this sample or in that sample itself (possibly by using extractors).
- Otherwise (the sample contains no IRAP picture), each parameter set needed for decoding that sample shall be included either in the sample entries of the tracks carrying layers present in this sample or in any of the samples since the previous sample containing at least one IRAP picture to that sample itself (possibly by using extractors), inclusive.

The lengthSizeMinusOne field in the L-HEVC and HEVC configurations in any given sample entry of L-HEVC and HEVC tracks sharing the same base track shall have the same value.

Extractors or aggregators may be used for NAL units with nuh_layer_id greater than 0 regardless of the sample entry type, e.g., when the same entry type is 'hvc1' or 'hev1' and only an HEVC configuration is present.

NOTE When HEVC compatibility is indicated, it may be necessary to indicate a high enough level for the HEVC base layer to accommodate the bit rate of the entire stream, because all the NAL units are considered as included in the HEVC base layer and hence may be fed to the decoder, which is expected to discard those NAL unit it does not recognize. This case happens when the 'hvc1', 'hev1', 'hvc2', or 'hev2' sample entry is used and both HEVC and L-HEVC configurations are present.

An LHEVCConfigurationBox may be present in an 'hvc1', 'hev1', 'hvc2', or 'hev2' sample entry. In this case the HEVCLHVCSampleEntry definition below applies.

The following table shows for a video track all the possible uses of sample entries, configurations and the L-HEVC tools:

**Table 10 - Use of sample entries for HEVC and L-HEVC tracks**

| **sample entry name** | **with configuration records** | **Meaning** |
|---|---|---|
| 'hvc1' or 'hev1' | HEVC Configuration Only | A plain HEVC track without NAL units with nuh_layer_id greater than 0; Extractors and aggregators shall not be present. |
| 'hvc2' or 'hev2' | HEVC Configuration Only | A plain HEVC track without NAL units with nuh_layer_id greater than 0; Extractors may be present and used to reference NAL units; Aggregators may be present to contain and reference NAL units. |
| 'hvc2' or 'hev2' | HEVC and L-HEVC Configurations | An L-HEVC track with both NAL units with nuh_layer_id equal to 0 and NAL units with nuh_layer_id greater than 0; Extractors and aggregators may be present; Extractors may reference any NAL units; Aggregators may both contain and reference any NAL units. |
| 'mhv1', 'mhe1' | MV-HEVC Configuration Only | An L HEVC MV-HEVC track without-NAL units with nuh_layer_id equal to 0; Extractors shall not be present |
| 'mhv2', 'mhe2' | MV-HEVC Configuration Only | An MV-HEVC track without NAL units with nuh_layer_id equal to 0: Extractors may be present and used to reference NAL units: Aggregators may be present to contain and reference NAL units. |
| 'shv1', 'she1' | SHVC Configuration Only | An SHVC track without NAL units with nuh_layer_id equal to 0: Extractors shall not be present. |
| 'shv2', 'she2' | SHVC Configuration Only | An SHVC track without NAL units with nuh_layer_id equal to 0: Extractors may be present and used to reference NAL units: Aggregators may be present to contain and reference NAL units. |

### 9.7.3.1.2 Syntax

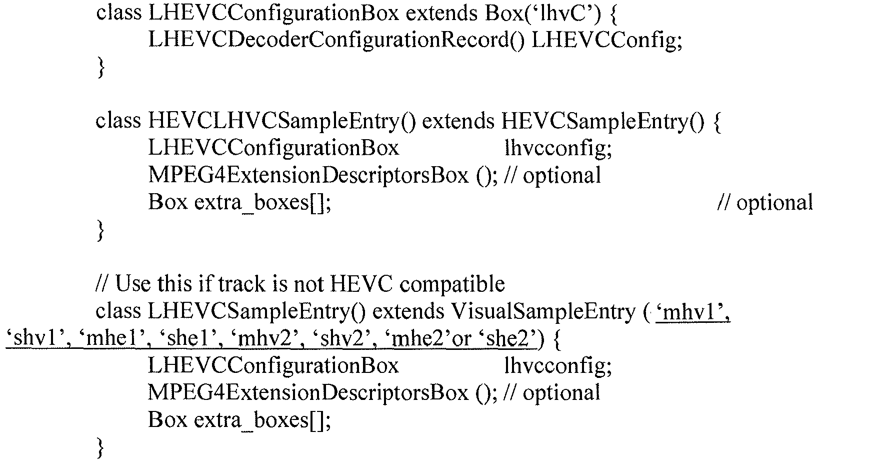

### 9.7.3.1.3 Semantics

When the stream to which the sample entry applies contains NAL units with nuh_layer_id greater than 0, Compressorname in the base class Visual SampleEntry indicates the name of the compressor used with the value "\014LHEVC Coding" being recommended (\014 is 12, the length of the string "LHEVC Coding" in bytes).

### 9.7.4 L-HEVC visual width and height

The visual width and height documented in a VisualSampleEntry of a stream containing NAL units with nuh_layer_id greater than 0 shall be the maximum visual width and height, respectively, of the decoded pictures in the track that is marked as an output layer of any output layer set.

### 9.7.5 Sync sample

An L-HEVC sample is considered as a sync sample if the base layer picture in the access unit is an IRAP picture as defined in ISO/IEC 23008-2. Sync samples are documented by the sync sample table, and may be additionally documented by the stream access point 'sap' sample group.

### 9.7.6 Stream Access Point sample group

The 'sync' box provides indication of only one type of random access possible in an L-HEVC media stream. There are many other types of random access possible. Annex I of ISO/IEC 14496-12 provides a significant discussion of the different types of random access. Locations in the bit stream where random access is possible are called stream access points (SAP). Annex I specifies six types of SAPs with different characteristics. To provide information of all different types of SAPs, a stream access sample group 'sap' specified in ISO/IEC 14496-12 is used.

The 'sap' sample grouping when used in the context of L-HEVC shall set layer_id_method_idc value to 1.

The field target_layers is 28 bits in length. Each bit in the field represents a layer . Since this field is only 28 bits in length, the indication of SAP points in a track is constrained to a maximum of 28 layers. Each bit of this field starting from the LSB shall be mapped to the list of layer IDs that is obtained after resolving reference tracks in ascending order of layer IDs.

For example, if the laer IDs of a track and its reference tracks are 4, 10, and 29, then the layer ID 4 is mapped to the least significant bit, the layer ID 10 is mapped to the second least significant bit, and the layer ID 29 maps to the third least significant bit. A value of one in the bit signals that in the sample the mapped layer has a picture that is a SAP of some type. In the previous example the following table give an example of layer specific SAP information.

**Table 11 - Bit pattern for the target_layer field of the 'sap' sample grouping for an example use case described above**

| **Bit pattern of target layers (LSB right most bit)** | **layer IDs (among 4, 10, 29) of SAPs** |
|---|---|
| 000000000000000000000010 | {10} |
| 000000000000000000000100 | {29} |
| 000000000000000000000101 | {29, 4} |

The type is resolved by following the group_description_index of the sample in the SampleToGroup box.

### 9.7.7 Sample groups on random access recovery points and random access points

For video data described by a sample entry of type 'hvc1', 'hev1', 'hvc2', or 'hev2', the random access recovery sample group and the stream access point sample group identify random access recovery points and random access points, respectively, for both an HEVC decoder, and an L-HEVC decoder (if any) operating on the entire bitstream.

For video data described by an L-HEVC sample entry type, the random access recovery sample group identifies random access recovery points in entire L-HEVC bitstream and the stream access point sample group identifies random access points in the entire L-HEVC bitstream.

An L-HEVC sample is considered as a random access point if coded pictures in the sample is an IRAP picture (with or without RASL pictures) as defined in ISO/IEC 23008-2, and the leading samples in ISO/IEC 14496-12 are samples in which all pictures are RASL pictures as defined in ISO/IEC 23008-2.

### 9.7.8 Independent and disposable samples box

If the independent and disposal samples box is used in a track which is both HEVC and L-HEVC compatible, then care should be taken that the information provided by this box is true no matter what valid subset of the L-HEVC data (possibly only the HEVC data) is used. The 'unknown' values (value 0 of the fields sample-depends-on, sample-is-depended-on, and sample-has-redundancy) may be needed if the information varies.

### 9.7.9 Definition of a sub-sample for L-HEVC

This subclause extends the definition of sub-sample of HEVC in 8.4.8.

For the use of the sub-sample information box (clause 8.7.7 of ISO/IEC 14496-12) in an L-HEVC stream, a sub-sample is defined on the basis of the value of the flags of the sub-sample information box as specified below. The presence of this box is optional; however, if present in a track containing L-HEVC data, it shall have the semantics defined here.

flags specifies the type of sub-sample information given in this box as follows:
0, 1, 2, and 4: Same as in 8.4.8.
5: Picture-based sub-samples. A sub-sample contains one coded picture and the associated non-VCL NAL units.

Other values of flags are reserved.

The subsample_priority field and the discardable field shall be set as specified in 8.4.8.

When the first byte of a NAL unit is included in a sub-sample, the preceding length field must also be included in the same sub-sample.

```
             if(flags == 0) {
                   unsigned int(1) SubLayerRefNalUnitFlag;
                   unsigned int(1) RapNalUnitFlag;
                   unsigned int(1) VclNalUnitFlag;
                   unsigned int(1) DiscardableFlag;
                   unsigned int(1) NoInterLayerPredFlag;
                   unsigned int(6) LayerId;
                   unsigned int(3) Templd;
                   unsigned int(18) reserved = 0;
             } else if(flags == 1)
                   unsigned int(32) reserved = 0;
             else if(flags == 2) {
                   unsigned int(2) vcl_idc;
                   unsigned int(2) reserved = 0;
                   unsigned int(4) log2_min_luma_ctb;
                   unsigned int(12) ctb_x;
                   unsigned int(12) ctb_y;
             } else if(flags == 3 ∥ flags == 4) {
                   unsigned int(2) vcl_idc;
                   unsigned int(30) reserved = 0;
             }
```

The semantics of SubLayerRefNalUnitFlag, RapNalUnitFlag, VclNalUnitFlag, vcl_idc, log2_min_luma_ctb, ctb_x, and ctb_y are the same as in 8.4.8.

DiscardableFlag indicates the discardable_flag value of the VCL NAL units in the sub-sample. All the VCL NAL units in the sub-sample shall have the same discardable_flag value.

NOTE This is not the same definition as the discardable field in the sub-sample information box.

NoInterLayerPredFlag indicates the value of the inter_layer_pred_enabled_flag of the VCL NAL units in the sub-sample. All the VCL NAL units in the sub-sample shall have the same value of inter_layer_pred_cnabled_flag.

LayerId indicates the nuh_layer_id value of the NAL units in the sub-sample. All the NAL units in the sub-sample shall have the same nuh_layer_id value.

TempId indicates the TemporalId value of the NAL units in the sub-sample. All the NAL units in the sub-sample shall have the same TemporalId value.

VclNalUnitType indicates the nuh_unit_type value of the VCL NAL units in the sub-sample. All the VCL NAL units in the sub-sample shall have the same nuh_unit_type value.

### 9.7.10 Handling non-output samples

What is specified in 8.4.9 is not always applicable when multiple layers are involved. If what is specified in 8.4.9 cannot be followed, then the sample is discarded and the duration of the previous sample is extended, so that the following samples have correct composition timing.

### 9.7.11 Indication of hybrid codec scalability

When a multi-layer HEVC bitstream uses an external base layer (i.e., when an active VPS of an HEVC bitstream has vps_base_layer_internal_flag equal to 0 and vps_base_layer_available_flag equal to 1), Sample Auxiliary Information with aux_info_type equal to 'lhvc' and aux_info_type_parameter equal to 0 shall be provided for a track that may use the external base layer as a reference for inter-layer prediction. Storage of sample auxiliary information shall conform to ISO/IEC 14496-12.

The syntax of the sample auxiliary information with aux_info_type equal to 'lhvc' is as follows:

```
        aligned(8) class LhvcSampleAuxiliaryDataFormat {
             unsigned int(1) bl_pic_used_flag;
             unsigned int(1) bl_irap_pic_flag;
             unsigned int(6) bl_irap_nal_unit_type;
             signed int(8) sample_offset; }
```

The semantics of the sample auxiliary information with aux_info_type equal to 'lhvc' are specified below. In the semantics, the term current sample refers to the sample that this sample auxiliary information is associated with and should be provided for the decoding of the sample.

bl_pic_used_flag equal to 0 specifies that no decoded base layer picture is used for the decoding of the current sample. bl_pic_used_flag equal to 1 specifies that a decoded base layer picture may be used for the decoding of the current sample.

bl_irap_pic_flag specifies, when bl_pic_used_flag is equal to 1, the value of the BlIrapPicFlag variable for the associated decoded picture, when that decoded picture is provided as a decoded base layer picture for the decoding of the current sample.

bl_irap_nal_unit_type specifies, when bl_pic_used_flag is equal to 1 and bl_irap_pic_flag is equal to 1, the value of the nal_unit_type syntax element for the associated decoded picture, when that decoded picture is provided as a decoded base layer picture for the decoding of the current sample.

sample_offset gives, when bl_pic_used_flag is equal to 1, the relative index of the associated sample in the linked track. The decoded picture resulting from the decoding of the associated sample in the linked track is the associated decoded picture that should be provided for the decoding of the current sample. sample_offset equal to 0 specifies that the associated sample has the same, or the closest preceding, decoding time compared to the decoding time of the current sample; sample_offset equal to 1 specifies that the associated sample is the next sample relative to the associated sample derived for sample_offset equal to 0; sample_offset equal to -1 specifies that the associated sample is the previous sample relative to the associated sample derived for sample_offset equal to 0, and so on.

### 9.8 L-HEVC specific information boxes

The following boxes specify information that relates to multiple layers of an L-HEVC elementary stream. As there may be multiple layers in the L-HEVC elementary stream that may be chosen for output, the information carried in these boxes is not specific to any single track.

**9.8.1 The Operating Points Information Box ('oinf')**

### 9.8.1.1 Definition

Box Type: 'oinf'
Container: MediaInformationBox ('minf') of the 'oref' type referenced track
Mandatory: Yes in one and only one track of an L-HEVC bit stream
Quantity: One

Applications are informed about the different operating points and their constitution by using the Operating Points Information Box ('oinf'). Each operating point is related to an output layer set, a max T-ID value, and a profile, level and tier signaling. All these information is captured by the 'oinf' box. Apart from these information, this box also provides the dependency information between layers, the types of scalabilities coded in the L-HEVC bit stream, and the dimension identifiers that relate to any particular layer for a given scalability type.

For a set of L-HEVC or HEVC tracks with a common 'sbas' track reference, there shall be only one track among this set that carries the 'oinf' box. All tracks with a common 'sbas' referenced track shall have a track reference of type 'oref' to the track that carries the 'oinf' box.

When this box is present, there shall be only one VPS in the track.

### 9.8.1.2 Syntax

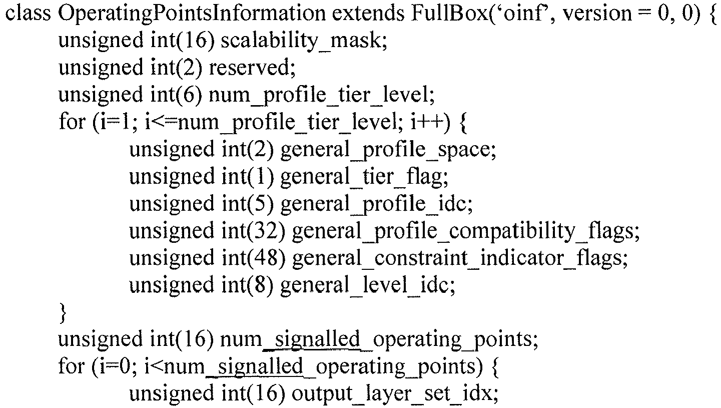

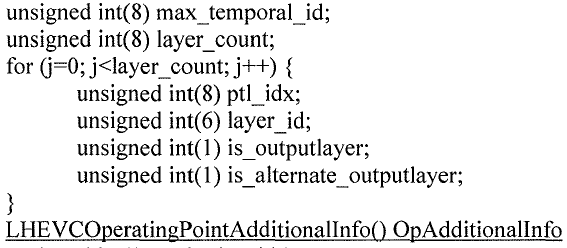

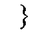

### 9.8.1.3 Semantics

scalability_mask: This field indicates the scalability types that are represented by all the layers related to the base track to which this box is associated (i.e., either this track or the track pointed to by an 'sbas' reference). Each bit in the scalability_mask field denotes a scalability dimension as coded in the scalability_mask_flag of the VPS extension syntax as defined in ISO/IEC 23008-2. A one in a bit position indicates that the scalability dimension is present.

num_profile_tier_level: Gives the number of following profile, tier, and level combinations as well as the associated fields.

general_profile_space, general_tier_flag, general_profile _idc, general_profile_compatibility_flags, general_constraint_indicator_flags, and general_level_idc are defined in ISO/IEC 23008-2.

num signalled_operating_points: Gives the number of operating points for which the information follows.

When num_signalled_operating_points is greater than 0, the following applies:

Sample entry name of each track containing parts of an L-HEVC bitstream shall be either mhv1, mhe1, shv1 or she1.

Otherwise, then num_signalled_operation_points is equal to 0, the following applies:

Sample entry name of each track containing parts of an L-HEVC bitstream shall be either mhv2, mhe2, shv2 or she2.

Each track with sample entry name hvc2, hev2, mhv2, mhe2, shv2 and she2 is associated with an operating points.

For operating point associated with track with sample entry name mhv2 or mhe2, all layers of the bitstream obtained by resolving extractors in the track are output layer.

For operating point associated with track with sample entry name shv2 or she2, only layer with the highest layer ID among all layers of the bitstream obtained by resolving extractors in the track is output layer.

output_layer_set_idx is the index of the output layer set that defines the operating point. The mapping between output_layer_set_idx and the layer_id values shall be the same as specified by the VPS for an output layer set with index output_layer_set_idx.

max_temporal_id: Gives the maximum TemporalId of NAL units of this operating point.

layer_count: This field indicates the number of necessary layers, as defined in ISO/IEC 23008-2, of this operating point.

ptl_idx: Signals the one-based index of the listed profile, level, and tier flags for a layer with identifier equal to layer_id. When the value of ptl_idx equals zero for a layer, that layer shall be assumed to have no profile, level, and tier signalled and that layer shall not be an output layer or a layer that is a direct or indirect reference layer of any output layer of the operating point.

layer_id: provides the layer ID values for the layers of the operating point.

is_outputlayer: A flag that indicates if the layer is an output layer or not. A one indicates an output layer.

is_alternate_outputlayer: This flag when set indicates that this layer can be considered as an alternate output layer for this operating point. This flag is set to one if and only if one layer in the operating point has its is_outputlayer flag set.

The coding techniques discussed herein may be implemented in an example video encoding and decoding system (e.g., system 100). A system includes a source device that provides encoded video data to be decoded at a later time by a destination device. In particular, the source device provides the video data to destination device via a computer-readable medium. The source device and the destination device may comprise any of a wide range of devices, including desktop computers, notebook (i.e., laptop) computers, tablet computers, set-top boxes, telephone handsets such as so-called "smart" phones, so-called "smart" pads, televisions, cameras, display devices, digital media players, video gaming consoles, video streaming device, or the like. In some cases, the source device and the destination device may be equipped for wireless communication.

The destination device may receive the encoded video data to be decoded via the computer-readable medium. The computer-readable medium may comprise any type of medium or device capable of moving the encoded video data from source device to destination device. In one example, computer-readable medium may comprise a communication medium to enable source device to transmit encoded video data directly to destination device in real-time. The encoded video data may be modulated according to a communication standard, such as a wireless communication protocol, and transmitted to destination device. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device to destination device.

In some examples, encoded data may be output from output interface to a storage device. Similarly, encoded data may be accessed from the storage device by input interface. The storage device may include any of a variety of distributed or locally accessed data storage media such as a hard drive, Blu-ray discs, DVDs, CD-ROMs, flash memory, volatile or non-volatile memory, or any other suitable digital storage media for storing encoded video data. In a further example, the storage device may correspond to a file server or another intermediate storage device that may store the encoded video generated by source device. Destination device may access stored video data from the storage device via streaming or download. The file server may be any type of server capable of storing encoded video data and transmitting that encoded video data to the destination device. Example file servers include a web server (e.g., for a website), an FTP server, network attached storage (NAS) devices, or a local disk drive. Destination device may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from the storage device may be a streaming transmission, a download transmission, or a combination thereof.

The techniques of this disclosure are not necessarily limited to wireless applications or settings. The techniques may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications. In some examples, system may be configured to support one-way or two-way video transmission to support applications such as video streaming, video playback, video broadcasting, and/or video telephony.

In one example the source device includes a video source, a video encoder, and a output interface. The destination device may include an input interface, a video decoder, and a display device. The video encoder of source device may be configured to apply the techniques disclosed herein. In other examples, a source device and a destination device may include other components or arrangements. For example, the source device may receive video data from an external video source, such as an external camera. Likewise, the destination device may interface with an external display device, rather than including an integrated display device.

The example system above merely one example. Techniques for processing video data in parallel may be performed by any digital video encoding and/or decoding device. Although generally the techniques of this disclosure are performed by a video encoding device, the techniques may also be performed by a video encoder/decoder, typically referred to as a "CODEC." Moreover, the techniques of this disclosure may also be performed by a video preprocessor. Source device and destination device are merely examples of such coding devices in which source device generates coded video data for transmission to destination device. In some examples, the source and destination devices may operate in a substantially symmetrical manner such that each of the devices include video encoding and decoding components. Hence, example systems may support one-way or two-way video transmission between video devices, e.g., for video streaming, video playback, video broadcasting, or video telephony.

The video source may include a video capture device, such as a video camera, a video archive containing previously captured video, and/or a video feed interface to receive video from a video content provider. As a further alternative, the video source may generate computer graphics-based data as the source video, or a combination of live video, archived video, and computer-generated video. In some cases, if video source is a video camera, source device and destination device may form so-called camera phones or video phones. As mentioned above, however, the techniques described in this disclosure may be applicable to video coding in general, and may be applied to wireless and/or wired applications. In each case, the captured, pre-captured, or computer-generated video may be encoded by the video encoder. The encoded video information may then be output by output interface onto the computer-readable medium.

As noted the computer-readable medium may include transient media, such as a wireless broadcast or wired network transmission, or storage media (that is, non-transitory storage media), such as a hard disk, flash drive, compact disc, digital video disc, Blu-ray disc, or other computer-readable media. In some examples, a network server (not shown) may receive encoded video data from the source device and provide the encoded video data to the destination device, e.g., via network transmission. Similarly, a computing device of a medium production facility, such as a disc stamping facility, may receive encoded video data from the source device and produce a disc containing the encoded video data. Therefore, the computer-readable medium may be understood to include one or more computer-readable media of various forms, in various examples.

The input interface of the destination device receives information from the computer-readable medium. The information of the computer-readable medium may include syntax information defined by the video encoder, which is also used by the video decoder, that includes syntax elements that describe characteristics and/or processing of blocks and other coded units, e.g., group of pictures (GOP). A display device displays the decoded video data to a user, and may comprise any of a variety of display devices such as a cathode ray tube (CRT), a liquid crystal display (LCD), a plasma display, an organic light emitting diode (OLED) display, or another type of display device. Various embodiments of the invention have been described.

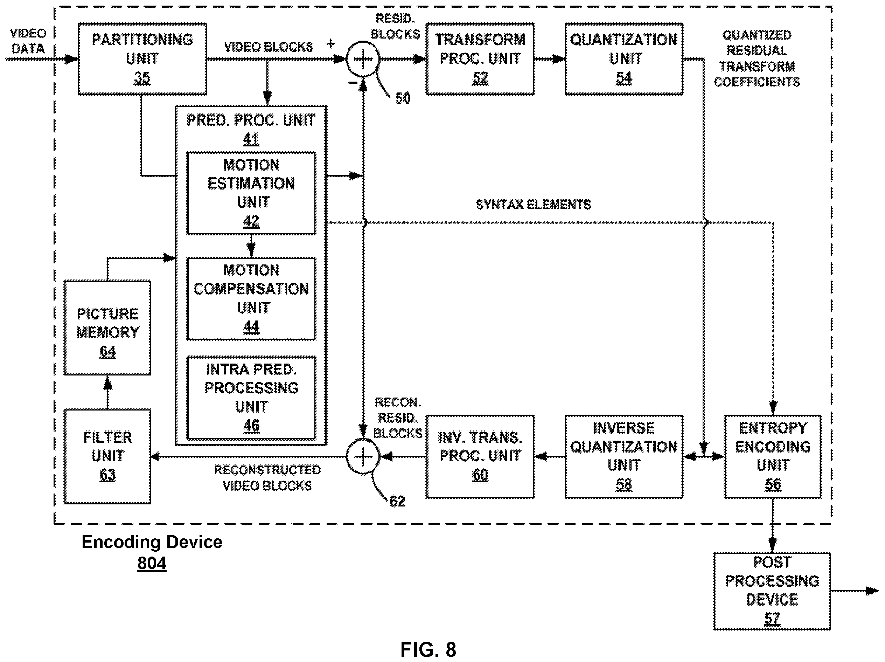

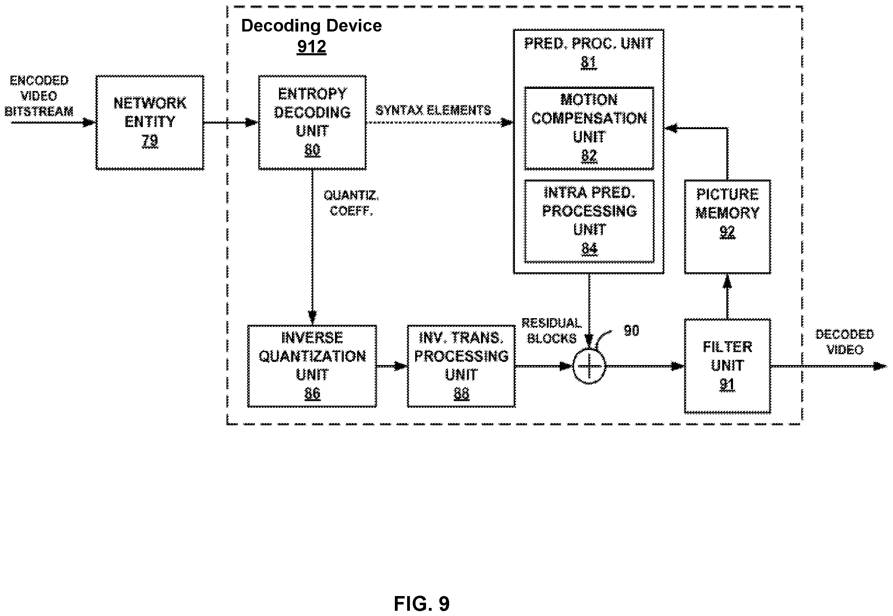

Specific details of the encoding device 804 and the decoding device 912 are shown in FIG. 8 and FIG. 9, respectively. FIG. 8 is a block diagram illustrating an example encoding device 804 that may implement one or more of the techniques described in this disclosure. Encoding device 804 may, for example, generate the syntax structures described herein (e.g., the syntax structures of a VPS, SPS, PPS, or other syntax elements). Encoding device 804 may perform intra-prediction and inter-prediction coding of video blocks within video slices. As previously described, intra-coding relies, at least in part, on spatial prediction to reduce or remove spatial redundancy within a given video frame or picture. Inter-coding relies, at least in part, on temporal prediction to reduce or remove temporal redundancy within adjacent or surrounding frames of a video sequence. Intra-mode (I mode) may refer to any of several spatial based compression modes. Inter-modes, such as uni-directional prediction (P mode) or bi-prediction (B mode), may refer to any of several temporal-based compression modes.

The encoding device 804 includes a partitioning unit 35, prediction processing unit 41, filter unit 63, picture memory 64, summer 50, transform processing unit 52, quantization unit 54, and entropy encoding unit 56. Prediction processing unit 41 includes motion estimation unit 42, motion compensation unit 44, and intra-prediction processing unit 46. For video block reconstruction, encoding device 804 also includes inverse quantization unit 58, inverse transform processing unit 60, and summer 62. Filter unit 63 is intended to represent one or more loop filters such as a deblocking filter, an adaptive loop filter (ALF), and a sample adaptive offset (SAO) filter. Although filter unit 63 is shown in FIG. 8 as being an in loop filter, in other configurations, filter unit 63 may be implemented as a post loop filter. A post processing device 57 may perform additional processing on encoded video data generated by encoding device 804. The techniques of this disclosure may in some instances be implemented by encoding device 804. In other instances, however, one or more of the techniques of this disclosure may be implemented by post processing device 57.

As shown in FIG. 8, encoding device 804 receives video data, and partitioning unit 35 partitions the data into video blocks. The partitioning may also include partitioning into slices, slice segments, tiles, or other larger units, as wells as video block partitioning, e.g., according to a quadtree structure of LCUs and CUs. Encoding device 804 generally illustrates the components that encode video blocks within a video slice to be encoded. The slice may be divided into multiple video blocks (and possibly into sets of video blocks referred to as tiles). Prediction processing unit 41 may select one of a plurality of possible coding modes, such as one of a plurality of intra-prediction coding modes or one of a plurality of inter-prediction coding modes, for the current video block based on error results (e.g., coding rate and the level of distortion, or the like). Prediction processing unit 41 may provide the resulting intra- or inter-coded block to summer 50 to generate residual block data and to summer 62 to reconstruct the encoded block for use as a reference picture.

Intra-prediction processing unit 46 within prediction processing unit 41 may perform intra-prediction coding of the current video block relative to one or more neighboring blocks in the same frame or slice as the current block to be coded to provide spatial compression. Motion estimation unit 42 and motion compensation unit 44 within prediction processing unit 41 perform inter-predictive coding of the current video block relative to one or more predictive blocks in one or more reference pictures to provide temporal compression.

Motion estimation unit 42 may be configured to determine the inter-prediction mode for a video slice according to a predetermined pattern for a video sequence. The predetermined pattern may designate video slices in the sequence as P slices, B slices, or GPB slices. Motion estimation unit 42 and motion compensation unit 44 may be highly integrated, but are illustrated separately for conceptual purposes. Motion estimation, performed by motion estimation unit 42, is the process of generating motion vectors, which estimate motion for video blocks. A motion vector, for example, may indicate the displacement of a prediction unit (PU) of a video block within a current video frame or picture relative to a predictive block within a reference picture.

A predictive block is a block that is found to closely match the PU of the video block to be coded in terms of pixel difference, which may be determined by sum of absolute difference (SAD), sum of square difference (SSD), or other difference metrics. In some examples, encoding device 804 may calculate values for sub-integer pixel positions of reference pictures stored in picture memory 64. For example, encoding device 804 may interpolate values of one-quarter pixel positions, one-eighth pixel positions, or other fractional pixel positions of the reference picture. Therefore, motion estimation unit 42 may perform a motion search relative to the full pixel positions and fractional pixel positions and output a motion vector with fractional pixel precision.

Motion estimation unit 42 calculates a motion vector for a PU of a video block in an inter-coded slice by comparing the position of the PU to the position of a predictive block of a reference picture. The reference picture may be selected from a first reference picture list (List 0) or a second reference picture list (List 1), each of which identify one or more reference pictures stored in picture memory 64. Motion estimation unit 42 sends the calculated motion vector to entropy encoding unit 56 and motion compensation unit 44.

Motion compensation, performed by motion compensation unit 44, may involve fetching or generating the predictive block based on the motion vector determined by motion estimation, possibly performing interpolations to sub-pixel precision. Upon receiving the motion vector for the PU of the current video block, motion compensation unit 44 may locate the predictive block to which the motion vector points in a reference picture list. Encoding device 804 forms a residual video block by subtracting pixel values of the predictive block from the pixel values of the current video block being coded, forming pixel difference values. The pixel difference values form residual data for the block, and may include both luma and chroma difference components. Summer 50 represents the component or components that perform this subtraction operation. Motion compensation unit 44 may also generate syntax elements associated with the video blocks and the video slice for use by decoding device 912 in decoding the video blocks of the video slice.

Intra-prediction processing unit 46 may intra-predict a current block, as an alternative to the inter-prediction performed by motion estimation unit 42 and motion compensation unit 44, as described above. In particular, intra-prediction processing unit 46 may determine an intra-prediction mode to use to encode a current block. In some examples, intra-prediction processing unit 46 may encode a current block using various intra-prediction modes, e.g., during separate encoding passes, and intra-prediction unit processing 46 (or mode select unit 40, in some examples) may select an appropriate intra-prediction mode to use from the tested modes. For example, intra-prediction processing unit 46 may calculate rate-distortion values using a rate-distortion analysis for the various tested intra-prediction modes, and may select the intra-prediction mode having the best rate-distortion characteristics among the tested modes. Rate-distortion analysis generally determines an amount of distortion (or error) between an encoded block and an original, unencoded block that was encoded to produce the encoded block, as well as a bit rate (that is, a number of bits) used to produce the encoded block. Intra-prediction processing unit 46 may calculate ratios from the distortions and rates for the various encoded blocks to determine which intra-prediction mode exhibits the best rate-distortion value for the block.

In any case, after selecting an intra-prediction mode for a block, intra-prediction processing unit 46 may provide information indicative of the selected intra-prediction mode for the block to entropy encoding unit 56. Entropy encoding unit 56 may encode the information indicating the selected intra-prediction mode. Encoding device 804 may include in the transmitted bitstream configuration data definitions of encoding contexts for various blocks as well as indications of a most probable intra-prediction mode, an intra-prediction mode index table, and a modified intra-prediction mode index table to use for each of the contexts. The bitstream configuration data may include a plurality of intra-prediction mode index tables and a plurality of modified intra-prediction mode index tables (also referred to as codeword mapping tables).

After prediction processing unit 41 generates the predictive block for the current video block via either inter-prediction or intra-prediction, encoding device 804 forms a residual video block by subtracting the predictive block from the current video block. The residual video data in the residual block may be included in one or more TUs and applied to transform processing unit 52. Transform processing unit 52 transforms the residual video data into residual transform coefficients using a transform, such as a discrete cosine transform (DCT) or a conceptually similar transform. Transform processing unit 52 may convert the residual video data from a pixel domain to a transform domain, such as a frequency domain.

Transform processing unit 52 may send the resulting transform coefficients to quantization unit 54. Quantization unit 54 quantizes the transform coefficients to further reduce bit rate. The quantization process may reduce the bit depth associated with some or all of the coefficients. The degree of quantization may be modified by adjusting a quantization parameter. In some examples, quantization unit 54 may then perform a scan of the matrix including the quantized transform coefficients. Alternatively, entropy encoding unit 56 may perform the scan.

Following quantization, entropy encoding unit 56 entropy encodes the quantized transform coefficients. For example, entropy encoding unit 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy encoding technique. Following the entropy encoding by entropy encoding unit 56, the encoded bitstream may be transmitted to decoding device 912, or archived for later transmission or retrieval by decoding device 912. Entropy encoding unit 56 may also entropy encode the motion vectors and the other syntax elements for the current video slice being coded.

Inverse quantization unit 58 and inverse transform processing unit 60 apply inverse quantization and inverse transformation, respectively, to reconstruct the residual block in the pixel domain for later use as a reference block of a reference picture. Motion compensation unit 44 may calculate a reference block by adding the residual block to a predictive block of one of the reference pictures within a reference picture list. Motion compensation unit 44 may also apply one or more interpolation filters to the reconstructed residual block to calculate sub-integer pixel values for use in motion estimation. Summer 62 adds the reconstructed residual block to the motion compensated prediction block produced by motion compensation unit 44 to produce a reference block for storage in picture memory 64. The reference block may be used by motion estimation unit 42 and motion compensation unit 44 as a reference block to inter-predict a block in a subsequent video frame or picture.

In this manner, encoding device 804 of FIG. 8 represents an example of a video encoder configured to generate syntax for a encoded video bitstream. Encoding device 804 may, for example, generate VPS, SPS, and PPS parameter sets as described above. The encoding device 804 may perform any of the techniques described herein, including the processes described above with respect to FIG. 8 and FIG. 9. The techniques of this disclosure have generally been described with respect to encoding device 804, but as mentioned above, some of the techniques of this disclosure may also be implemented by post processing device 57.

FIG. 9 is a block diagram illustrating an example decoding device 912. The decoding device 912 includes an entropy decoding unit 80, prediction processing unit 81, inverse quantization unit 86, inverse transform processing unit 88, summer 90, filter unit 91, and picture memory 92. Prediction processing unit 81 includes motion compensation unit 82 and intra prediction processing unit 84. Decoding device 912 may, in some examples, perform a decoding pass generally reciprocal to the encoding pass described with respect to encoding device 804 from FIG. 8.

During the decoding process, decoding device 912 receives an encoded video bitstream that represents video blocks of an encoded video slice and associated syntax elements sent by encoding device 804. In some embodiments, the decoding device 912 may receive the encoded video bitstream from the encoding device 804. In some embodiments, the decoding device 912 may receive the encoded video bitstream from a network entity 79, such as a server, a media-aware network element (MANE), a video editor/splicer, or other such device configured to implement one or more of the techniques described above. Network entity 79 may or may not include encoding device 804. Some of the techniques described in this disclosure may be implemented by network entity 79 prior to network entity 79 transmitting the encoded video bitstream to decoding device 912. In some video decoding systems, network entity 79 and decoding device 912 may be parts of separate devices, while in other instances, the functionality described with respect to network entity 79 may be performed by the same device that comprises decoding device 912.

The entropy decoding unit 80 of decoding device 912 entropy decodes the bitstream to generate quantized coefficients, motion vectors, and other syntax elements. Entropy decoding unit 80 forwards the motion vectors and other syntax elements to prediction processing unit 81. Decoding device 912 may receive the syntax elements at the video slice level and/or the video block level. Entropy decoding unit 80 may process and parse both fixed-length syntax elements and variable-length syntax elements in or more parameter sets, such as a VPS, SPS, and PPS.

When the video slice is coded as an intra-coded (I) slice, intra prediction processing unit 84 of prediction processing unit 81 may generate prediction data for a video block of the current video slice based on a signaled intra-prediction mode and data from previously decoded blocks of the current frame or picture. When the video frame is coded as an inter-coded (i.e., B, P or GPB) slice, motion compensation unit 82 of prediction processing unit 81 produces predictive blocks for a video block of the current video slice based on the motion vectors and other syntax elements received from entropy decoding unit 80. The predictive blocks may be produced from one of the reference pictures within a reference picture list. Decoding device 912 may construct the reference frame lists, List 0 and List 1, using default construction techniques based on reference pictures stored in picture memory 92.

Motion compensation unit 82 determines prediction information for a video block of the current video slice by parsing the motion vectors and other syntax elements, and uses the prediction information to produce the predictive blocks for the current video block being decoded. For example, motion compensation unit 82 may use one or more syntax elements in a parameter set to determine a prediction mode (e.g., intra- or inter-prediction) used to code the video blocks of the video slice, an inter-prediction slice type (e.g., B slice, P slice, or GPB slice), construction information for one or more reference picture lists for the slice, motion vectors for each inter-encoded video block of the slice, inter-prediction status for each inter-coded video block of the slice, and other information to decode the video blocks in the current video slice.

Motion compensation unit 82 may also perform interpolation based on interpolation filters. Motion compensation unit 82 may use interpolation filters as used by encoding device 804 during encoding of the video blocks to calculate interpolated values for sub-integer pixels of reference blocks. In this case, motion compensation unit 82 may determine the interpolation filters used by encoding device 804 from the received syntax elements, and may use the interpolation filters to produce predictive blocks.

Inverse quantization unit 86 inverse quantizes, or de-quantizes, the quantized transform coefficients provided in the bitstream and decoded by entropy decoding unit 80. The inverse quantization process may include use of a quantization parameter calculated by encoding device 804 for each video block in the video slice to determine a degree of quantization and, likewise, a degree of inverse quantization that should be applied. Inverse transform processing unit 88 applies an inverse transform (e.g., an inverse DCT or other suitable inverse transform), an inverse integer transform, or a conceptually similar inverse transform process, to the transform coefficients in order to produce residual blocks in the pixel domain.

After motion compensation unit 82 generates the predictive block for the current video block based on the motion vectors and other syntax elements, decoding device 912 forms a decoded video block by summing the residual blocks from inverse transform processing unit 88 with the corresponding predictive blocks generated by motion compensation unit 82. Summer 90 represents the component or components that perform this summation operation. If desired, loop filters (either in the coding loop or after the coding loop) may also be used to smooth pixel transitions, or to otherwise improve the video quality. Filter unit 91 is intended to represent one or more loop filters such as a deblocking filter, an adaptive loop filter (ALF), and a sample adaptive offset (SAO) filter. Although filter unit 91 is shown in FIG. 9 as being an in loop filter, in other configurations, filter unit 91 may be implemented as a post loop filter. The decoded video blocks in a given frame or picture are then stored in picture memory 92, which stores reference pictures used for subsequent motion compensation. Picture memory 92 also stores decoded video for later presentation on a display device, such as video destination device 122 shown in FIG. 1.

In the foregoing description, aspects of the application are described with reference to specific embodiments thereof, but those skilled in the art will recognize that the invention is not limited thereto. Thus, while illustrative embodiments of the application have been described in detail herein, it is to be understood that the inventive concepts may be otherwise variously embodied and employed, and that the appended claims are intended to be construed to include such variations, except as limited by the prior art. Various features and aspects of the above-described invention may be used individually or jointly. The specification and drawings are, accordingly, to be regarded as illustrative rather than restrictive. For the purposes of illustration, methods were described in a particular order. It should be appreciated that in alternate embodiments, the methods may be performed in a different order than that described.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the systems and methods described herein.

The techniques described herein may be implemented in hardware, software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein. In addition, in some aspects, the functionality described herein may be provided within dedicated software modules or hardware modules configured for encoding and decoding, or incorporated in a combined video encoder-decoder (CODEC).

## Claims

1. A device for encoding video data, comprising:
a memory configured to store the video data; and
a video encoding device in communication with the memory, wherein the video encoding device is configured to:
process multi-layer video data, the multi-layer video data including a plurality of layers, each layer comprising at least one picture unit including at least one video coding layer (VCL) network abstraction layer (NAL) unit and any associated non-VCL NAL units;
generate an output file (400) associated with the multi-layer video data, the output file being generated using an International Standards Organization (ISO) base media file format, wherein:
the output file includes a plurality of tracks (410a, 410b, 410c);
each track of the plurality of tracks comprises only one layer of the multi-layer video data;
each track of the plurality of tracks does not include an aggregator and does not include an extractor, the aggregator including structures enabling scalable grouping of NAL units by changing irregular patterns of NAL units into regular patterns of aggregated data units, and the extractor including structures enabling extraction of NAL units from other tracks than a track containing media data;
the output file further comprises a track layer identifier list which
identifies one or more layers to be included in an operation point;
a sample entry name is associated with the output file, wherein the sample entry name is a file type included in the output file, and wherein the sample entry name indicates that each track of the plurality of tracks of the output file does not include more than one layer and indicates that each track of the plurality of tracks does not include an aggregator and does not include an extractor;
and wherein the sample entry name further indicates that no Track Content Information (tcon) box is generated for the output file; and, that a layer identifier is included in each of the one or more tracks, wherein the layer identifier identifies the one layer that is included in the track.

2. The device of claim 1, wherein the video encoding device is further configured to generate an Operating Point Information (oinf) box, wherein the oinf box includes a list of one or more operating points included in the multi-layer video data, wherein an operating point is associated with one or more layers, and wherein the oinf box indicates which of the one or more tracks contain layers that are associated with each of the one or more operating points.

3. The device of claim 1, wherein the multi-layer video data further includes a subset of layers, wherein the subset of layers includes one or more temporal sub-layers, and wherein each track from the one or more tracks does not include more than one subset of layers from the multi-layer video data.

4. The device of claim 1, wherein the multi-layer video data is layered high efficiency video coding (L-HEVC) video data.

5. A device for decoding video data, comprising:
memory configured to store the video data; and
a video decoding device in communication with the memory, wherein the video decoding device is configured to:
process a sample entry name of an output file generated using an International Standards Organization (ISO) base media file format, the output file associated with multi-layer video data, the multi-layer video data including a plurality of layers, each layer comprising at least one picture unit including at least one video coding layer (VCL) network abstraction layer (NAL) unit and any associated non-VCL NAL units, the output file comprising a plurality of tracks; and
determine, based on a sample entry name of the output file, that each track of the plurality of tracks of the output file comprises only one layer of the plurality of layers and that each of the plurality of tracks does not include an aggregator and an extractor, the aggregator including structures enabling scalable grouping of NAL units by changing irregular patterns of NAL units into regular patterns of aggregated data units and the extractor including structures enabling extraction of NAL units from other tracks than a track containing media data wherein the output file further comprises a track layer identifier list which identifies one or more layers to be included in an operation point, wherein the sample entry name is a file type, and wherein the file type is included in the output file and wherein the output file does not include a Track Content Information (tcon) box and wherein each track of the output file includes a layer identifier, wherein the layer identifier identifies the one layer that is included in the track.

6. The device of claim 5, wherein the output file includes an Operating Point Information (oinf) box, wherein the oinf box includes a list of one or more operating points included in the video data, wherein an operating point is associated with one or more layers, and wherein the oinf box indicates which of the one or more tracks contain layers that are associated with each of the one or more operating points.

7. The device of claim 5, wherein the multi-layer video data further includes one or more temporal sub-layers, and wherein each track from the one or more tracks includes only one layer or one temporal sub-layer from the multi-layer video data.

8. The device of claim 5, wherein the multi-layer video data is layered high efficiency video coding (L-HEVC) video data.

9. A method for video decoding, comprising:
processing, a sample entry name of an output file generated using an International Standards Organization (ISO) base media file format, the output file associated with multi-layer video data, the multi-layer video data including a plurality of layers, each layer comprising at least one picture unit including at least one video coding layer (VCL) network abstraction layer (NAL) unit and any associated non-VCL NAL units, the output file comprising a plurality of tracks; and
determining, based on the sample entry name of the output file that each track of the plurality of tracks of the output file comprises only one layer of the multi layer video data and that each of the plurality of tracks does not include an aggregator and an extractor, the aggregator including structures enabling scalable grouping of NAL units by changing irregular patterns of NAL units into regular patterns of aggregated data units and the extractor including structures enabling extraction of NAL units from other tracks than a track containing media data wherein the output file further comprises a track layer identifier list which identifies one or more layers to be included in an operation point, wherein the sample entry name is a file type, and wherein the file type is included in the output file,wherein the output file does not include a Track Content Information (tcon) box and wherein each track of the output file includes a layer identifier, wherein the layer identifier identifies the one layer that is included in the track.

10. The method of claim 9, wherein the output file includes an Operating Point Information (oinf) box, wherein the oinf box includes a list of one or more operating points included in the multi-layer video data, wherein an operating point is associated with one or more layers, and wherein the oinf box indicates which of the one or more tracks contain layers that are associated with each of the one or more operating points.

11. The method of claim 9, wherein the multi-layer video data further includes a subset of layers, wherein the subset of layers includes one or more temporal sub-layers, and wherein each track from the one or more tracks includes at most one layer or one subset of layers from the multi-layer video data.

12. A computer-program product tangibly embodied in a non-transitory machine-readable storage medium, including instructions that, when executed by one or more processors, cause the one or more processors to execute the method of any one of claims 9 to 11.

## Patentansprüche

1. Gerät zum Encodieren von Videodaten, das Folgendes umfasst:
einen Speicher, konfiguriert zum Speichern der Videodaten; und
ein Videoencodiergerät in Kommunikation mit dem Speicher, wobei das Videoencodiergerät konfiguriert ist zum:
Verarbeiten von mehrschichtigen Videodaten, wobei die mehrschichtigen Videodaten mehrere Schichten beinhalten, wobei jede Schicht wenigstens eine Bildeinheit mit wenigstens einer VCL-(Video Coding Layer)-NAL-(Network Abstraction Layer)-Einheit und evtl. assoziierten Nicht-VCL-NAL-Einheiten beinhaltet;
Erzeugen einer mit den mehrschichtigen Videodaten assoziierten Ausgabedatei (400), wobei die Ausgabedatei mit einem Mediendateiformat auf ISO-(International Standards Organisation)-Basis erzeugt wird, wobei:
die Ausgabedatei mehrere Tracks (410a, 410b, 410c) beinhaltet;
jeder Track der mehreren Tracks nur eine Schicht der mehrschichtigen Videodaten umfasst;
jeder Track der mehreren Tracks keinen Aggregator und keinen Extraktor beinhaltet;
wobei der Aggregator Strukturen beinhaltet, die ein skalierbares Gruppieren von NAL-Einheiten durch Ändern von unregelmäßigen Mustern von NAL-Einheiten in regelmäßige Muster von aggregierten Dateneinheiten ermöglichen, und wobei der Extraktor Strukturen beinhaltet, die die Extraktion von NAL-Einheiten von anderen Tracks als einem Mediendaten enthaltenen Track ermöglichen;
die Ausgabedatei ferner eine Trackschicht-Kennungsliste beinhaltet, die eine oder mehrere in einen Betriebspunkt einzubeziehende Schichten identifiziert;
ein Sample-Eintragsname mit der Ausgabedatei assoziiert ist, wobei der Sample-Eintragsname ein in der Ausgabedatei enthaltener Dateityp ist und wobei der Sample-Eintragsname anzeigt, dass jeder Track der mehreren Tracks der Ausgabedatei nicht mehr als eine Schicht beinhaltet, und anzeigt, dass jeder Track der mehreren Tracks keinen Aggregator und keinen Extraktor beinhaltet;
und wobei der Sample-Eintragsname ferner anzeigt, dass keine Track Content Information (tcon) Box für die Ausgabedatei erzeugt wird; und dass
eine Schichtkennung in jedem der ein oder mehreren Tracks enthalten ist, wobei die Schichtkennung die eine in dem Track enthaltene Schicht identifiziert.

2. Gerät nach Anspruch 1, wobei das Videoencodiergerät ferner zum Erzeugen einer Operation Point Information (oinf) Box konfiguriert ist, wobei die oinf-Box eine Liste von einem oder mehreren in den mehrschichtigen Videodaten enthaltenen Betriebspunkten beinhaltet, wobei ein Betriebspunkt mit einer oder mehreren Schichten assoziiert ist und wobei die oinf-Box anzeigt, welche der ein oder mehreren Tracks Schichten enthalten, die mit jedem der ein oder mehreren Betriebspunkte assoziiert sind.

3. Gerät nach Anspruch 1, wobei die mehrschichtigen Videodaten ferner einen Teilsatz von Schichten beinhalten, wobei der Teilsatz von Schichten eine oder mehrere zeitliche Subschichten beinhaltet und wobei jeder Track der ein oder mehreren Tracks nicht mehr als einen Teilsatz von Schichten aus den mehrschichtigen Videodaten beinhaltet.

4. Gerät nach Anspruch 1, wobei die mehrschichtigen Videodaten L-HEVC-(Layered High Efficiency Video Coding)-Videodaten sind.

5. Gerät zum Decodieren von Videodaten, das Folgendes umfasst:
einen Speicher, konfiguriert zum Speichern der Videodaten; und
ein Videodecodiergerät in Kommunikation mit dem Speicher, wobei das Videodecodiergerät konfiguriert ist zum:
Verarbeiten eines Sample-Eintragsnamens einer mit einem Mediendateiformat auf ISO-(International Standards Organisation)-Basis erzeugten Ausgabedatei, wobei die Ausgabedatei mit mehrschichtigen Videodaten assoziiert ist, wobei die mehrschichtigen Videodaten mehrere Schichten beinhalten, wobei jede Schicht wenigstens eine Bildeinheit mit wenigstens einer VCL-(Video Coding Layer)-NAL-(Network Abstraction Layer)-Einheit und evtl. assoziierten Nicht-VCL-NAL-Einheiten umfasst, wobei die Ausgabedatei mehrere Tracks umfasst; und
Bestimmen, auf der Basis eines Sample-Eintragsnamens der Ausgabedatei, dass jeder Track der mehreren Tracks der Ausgabedatei nur eine Schicht der mehreren Schichten umfasst und dass jeder der mehreren Tracks keinen Aggregator und keinen Extraktor beinhaltet, wobei der Aggregator Strukturen beinhaltet, die das skalierbare Gruppieren von NAL-Einheiten durch Ändern von unregelmäßigen Mustern von NAL-Einheiten in regelmäßige Muster von aggregierten Dateneinheiten ermöglicht, und wobei der Extraktor Strukturen beinhaltet, die die Extraktion von NAL-Einheiten von anderen Tracks als einem Mediendaten enthaltenden Track ermöglichen, wobei die Ausgabedatei ferner eine Trackschicht-Kennungsliste umfasst, die eine oder mehrere in einen Betriebspunkt einzubeziehende Schichten identifiziert, wobei der Sample-Eintragsname ein Dateityp ist und wobei der Dateityp in der Ausgabedatei enthalten ist und wobei die Ausgabedatei keine Track Content Information (tcon) Box beinhaltet und wobei jeder Track der Ausgabedatei eine Schichtkennung beinhaltet, wobei die Schichtkennung die eine in dem Track enthaltene Schicht identifiziert.

6. Gerät nach Anspruch 5, wobei die Ausgabedatei eine Operation Point Information (oinf) Box beinhaltet, wobei die oinf-Box eine Liste von einem oder mehreren in den Videodaten enthaltenen Betriebspunkten beinhaltet, wobei ein Betriebspunkt mit einer oder mehreren Schichten assoziiert ist und wobei die oinf-Box anzeigt, welche der ein oder mehreren Tracks Schichten enthalten, die mit jedem der ein oder mehreren Betriebspunkte assoziiert sind.

7. Gerät nach Anspruch 5, wobei die mehrschichtigen Videodaten ferner eine oder mehrere zeitliche Subschichten beinhalten und wobei jeder Track der ein oder mehreren Tracks nur eine Schicht oder eine zeitliche Subschicht aus den mehrschichtigen Videodaten beinhaltet.

8. Gerät nach Anspruch 5, wobei die mehrschichtigen Videodaten L-HEVC-(Layered High Efficiency Video Coding)-Videodaten sind.

9. Verfahren zur Videodecodierung, das Folgendes beinhaltet:
Verarbeiten eines Sample-Eintragsnamens einer mit einem Mediendateiformat auf ISO-(International Standards Organisation)-Basis erzeugten Ausgabedatei, wobei die Ausgabedatei mit mehrschichtigen Videodaten assoziiert ist, wobei die mehrschichtigen Videodaten mehrere Schichten beinhalten, wobei jede Schicht wenigstens eine Bildeinheit einschließlich wenigstens einer VCL-(Video Coding Layer)-NAL-(Network Abstraction Layer)-Einheit und evtl. assoziierten Nicht-VCL-NAL-Einheiten beinhaltet, wobei die Ausgabedatei mehrere Tracks umfasst; und
Bestimmen, auf der Basis des Sample-Eintragsnamens der Ausgabedatei, dass jeder Track der mehreren Tracks der Ausgabedatei nur eine Schicht der mehrschichtigen Videodaten umfasst und dass jeder der mehreren Tracks keinen Aggregator und keinen Extraktor beinhaltet, wobei der Aggregator Strukturen beinhaltet, die das skalierbare Gruppieren von NAL-Einheiten durch Ändern von unregelmäßigen Mustern von NAL-Einheiten in regelmäßige Muster von aggregierten Dateneinheiten ermöglichen, und wobei der Extraktor Strukturen beinhaltet, die die Extraktion von NAL-Einheiten von anderen Tracks als einem Mediendaten enthaltenden Track ermöglichen, wobei die Ausgabedatei ferner eine Trackschicht-Kennungsliste umfasst, die eine oder mehrere in einen Betriebspunkt einzubeziehende Schichten identifiziert, wobei der Sample-Eintragsname ein Dateityp ist und wobei der Dateityp in der Ausgabedatei enthalten ist, wobei die Ausgabedatei keine Track Content Information (tcon) Box beinhaltet und wobei jeder Track der Ausgabedatei eine Schichtkennung beinhaltet, wobei die Schichtkennung die eine in dem Track enthaltene Schicht identifiziert.

10. Verfahren nach Anspruch 9, wobei die Ausgabedatei eine Operation Point Information (oinf) Box ist, wobei die oinf-Box eine Liste von einem oder mehreren in den mehrschichtigen Videodaten enthaltenen Betriebspunkten beinhaltet, wobei ein Betriebspunkt mit einer oder mehreren Schichten assoziiert ist und wobei die oinf-Box anzeigt, welche der ein oder mehreren Tracks Schichten enthalten, die mit jedem der ein oder mehreren Betriebspunkte assoziiert sind.

11. Verfahren nach Anspruch 9, wobei die mehrschichtigen Videodaten ferner einen Teilsatz von Schichten beinhalten, wobei der Teilsatz von Schichten eine oder mehrere zeitliche Subschichten beinhaltet und wobei jeder Track der ein oder mehreren Tracks höchstens eine Schicht oder einen Teilsatz von Schichten aus den mehrschichtigen Videodaten beinhaltet.

12. Computerprogrammprodukt, das materiell in einem nichtflüchtigen maschinenlesbaren Speichermedium ausgestaltet ist, mit Befehlen, die bei Ausführung durch einen oder mehrere Prozessoren bewirken, dass die ein oder mehreren Prozessoren das Verfahren nach einem der Ansprüche 9 bis 11 durchführen.

## Revendications

1. Dispositif de codage vidéo, comprenant :
une mémoire configurée pour mémoriser les données vidéo; et
un dispositif de codage vidéo en communication avec la mémoire, le dispositif de codage vidéo étant configuré pour :
traiter des données vidéo multicouches, les données vidéo multicouches comportant une pluralité de couches, chaque couche comprenant au moins une unité d'image comportant au moins une unité de couche d'abstraction de réseau (NAL) de couche de codage vidéo (VCL) et n'importe quelles unités non NAL VCL associées ;
générer un fichier de sortie (400) associé aux données vidéo multicouches, le fichier de sortie étant généré selon un format de fichier multimédia de base ISO (International Standards Organization), dans lequel :
le fichier de sortie comporte une pluralité de pistes (410a, 410b, 410c) ;
chaque piste de la pluralité de pistes comprend une seule couche des données vidéo multicouches ;
aucune piste de la pluralité de pistes ne comporte d'agrégateur ou d'extracteur, l'agrégateur comportant des structures permettant un groupement échelonnable d'unités NAL en changeant des configurations irrégulières d'unités NAL en configurations régulières d'unités de données agrégées, et l'extracteur comportant des structures permettant l'extraction d'unités NAL à partir de pistes autres qu'une piste contenant des données multimédia ;
le fichier de sortie comprend en outre une liste d'identifiants de couches de piste qui identifie une ou plusieurs couches à inclure dans un point de fonctionnement ;
un nom d'entrée échantillon est associé au fichier de sortie, le nom d'entrée échantillon étant un type de fichier inclus dans le fichier de sortie, et le nom d'entrée échantillon indiquant qu'aucune piste de la pluralité de pistes du fichier de sortie ne comporte d'agrégateur ou d'extracteur ;
et dans lequel le nom d'entrée échantillon indique en outre qu'aucune case d'informations de contenu de piste (tcon) n'est générée pour le fichier de sortie ; et, qu'un identifiant de couche est inclus dans chacune des une ou plusieurs pistes, l'identifiant de couche identifiant la couche qui est incluse dans la piste.

2. Dispositif selon la revendication 1, le dispositif de codage vidéo étant configuré en outre pour générer une case d'informations de point de fonctionnement (oinf), la case oinf comportant une liste d'un ou de plusieurs points de fonctionnement inclus dans les données vidéo multicouches, un point de fonctionnement étant associé à une ou plusieurs couches, et la case oinf indiquant celles des une ou plusieurs pistes qui contiennent des couches qui sont associées à chacun des un ou plusieurs points de fonctionnement.

3. Dispositif selon la revendication 1, dans lequel les données vidéo multicouches comportent en outre un sous-ensemble de couches, le sous-ensemble de couches comportant une ou plusieurs sous-couches temporelles, et dans lequel aucune piste parmi les une ou plusieurs pistes ne comporte pas plus d'un sous-ensemble de couches des données vidéo multicouches.

4. Dispositif selon la revendication 1, dans lequel les données vidéo multicouches sont des données vidéo de codage vidéo de haute efficacité (L-HEVC) disposées en couches.

5. Dispositif de décodage de données vidéo, comprenant :
une mémoire configurée pour mémoriser les données vidéo ; et
un dispositif de décodage vidéo en communication avec la mémoire, le dispositif de décodage vidéo étant configuré pour :
traiter un nom d'entrée échantillon d'un fichier de sortie généré selon un format de fichier multimédia de base ISO (International Standards Organization), le fichier de sortie étant associé à des données vidéo multicouches, les données vidéo multicouches comportant une pluralité de couches, chaque couche comprenant au moins une unité d'image comportant au moins une unité de couche d'abstraction de réseau (NAL) de couche de codage vidéo (VCL) et n'importe quelles unités non NAL VCL associées, le fichier de sortie comprenant une pluralité de pistes ; et
déterminer, sur la base d'un nom d'entrée échantillon du fichier de sortie, que chaque piste de la pluralité de pistes du fichier de sortie ne comprend qu'une seule couche de la pluralité de couches et qu'aucune de la pluralité de pistes ne comporte pas d'agrégateur ou d'extracteur, l'agrégateur comportant des structures permettant un groupement échelonnable d'unités NAL en changeant des configurations irrégulières d'unités NAL en configurations régulières d'unités de données agrégées, et l'extracteur comportant des structures permettant l'extraction d'unités NAL à partir de pistes autres qu'une piste contenant des données multimédia, dans lequel le fichier de sortie comprend en outre une liste d'identifiants de couches de piste qui identifie une ou plusieurs couches à inclure dans un point de fonctionnement, dans lequel le nom d'entrée échantillon est un type de fichier, et dans lequel le type de fichier est inclus dans le fichier de sortie et dans lequel le fichier de sortie ne comporte pas de case d'informations de contenu de piste (tcon) et dans lequel chaque piste du fichier de sortie comporte un identifiant de couche, l'identifiant de couche identifiant la couche qui est incluse dans la piste.

6. Dispositif selon la revendication 5, dans lequel le fichier de sortie comporte une case d"informations de point de fonctionnement (oinf), la case oinf comportant une liste d'un ou de plusieurs points de fonctionnement inclus dans les données vidéo, un point de fonctionnement étant associé à une ou plusieurs couches, et la case oinf indiquant celles des une ou plusieurs pistes qui contiennent des couches qui sont associées à chacun des un ou plusieurs points de fonctionnement.

7. Dispositif selon la revendication 5, dans lequel les données vidéo multicouches comportent en outre une ou plusieurs sous-couches temporelles, et dans lequel chaque piste des une ou plusieurs pistes ne comporte qu'une seule couche ou qu'une seule sous-couche temporelle des données vidéo multicouches.

8. Dispositif selon la revendication 5, dans lequel les données vidéo multicouches sont des données vidéo de codage vidéo de haute efficacité (L-HEVC) disposées en couches.

9. Procédé de décodage vidéo, comprenant :
le traitement d'un nom d'entrée échantillon d'un fichier de sortie généré selon un format de fichier multimédia de base ISO (International Standards Organization), le fichier de sortie étant associé à des données vidéo multicouches, les données vidéo multicouches comportant une pluralité de couches, chaque couche comprenant au moins une unité d'image comportant au moins une unité de couche d'abstraction de réseau (NAL) de couche de codage vidéo (VCL) et n'importe quelles unités non NAL VCL associées, le fichier de sortie comprenant une pluralité de pistes ; et
la détermination, sur la base du nom d'entrée échantillon du fichier de sortie, que chaque piste de la pluralité de pistes du fichier de sortie comprend une seule couche de la pluralité de couches et qu'aucune de la pluralité de pistes ne comporte pas d'agrégateur ou d'extracteur, l'agrégateur comportant des structures permettant un groupement échelonnable d'unités NAL en changeant des configurations irrégulières d'unités NAL en configurations régulières d'unités de données agrégées et l'extracteur comportant des structures permettant l'extraction d'unités NAL à partir de pistes autres qu'une piste contenant des données multimédia, dans lequel le fichier de sortie comprend en outre une liste d'identifiants de couches de piste qui identifie une ou plusieurs couches à inclure dans un point de fonctionnement, dans lequel le nom d'entrée échantillon est un type de fichier, et dans lequel le type de fichier est inclus dans le fichier de sortie et dans lequel le fichier de sortie ne comporte pas de case d'informations de contenu de piste (tcon) et dans lequel chaque piste du fichier de sortie comporte un identifiant de couche, l'identifiant de couche identifiant la couche qui est incluse dans la piste.

10. Procédé selon la revendication 9, dans lequel le fichier de sortie comporte une case d'informations de point de fonctionnement (oinf), la case oinf comportant une liste d'un ou de plusieurs points de fonctionnement inclus dans les données vidéo, un point de fonctionnement étant associé à une ou plusieurs couches, et la case oinf indiquant celles des une ou plusieurs pistes qui contiennent des couches qui sont associées à chacun des un ou plusieurs points de fonctionnement.

11. Procédé selon la revendication 9, dans lequel les données vidéo multicouches comportent en outre une ou plusieurs sous-couches temporelles, et dans lequel chaque piste des une ou plusieurs pistes comporte au plus une couche ou un sous-ensemble de couches des données vidéo multicouches.

12. Produit-programme informatique mis en oeuvre de manière tangible dans un support de mémorisation non transitoire lisible par machine, comportant des instructions qui, à leur exécution par un ou plusieurs processeurs, amènent les un ou plusieurs processeurs à exécuter le procédé selon l'une quelconque des revendications 9 à 11.
